(19) Europäisches Patentamt
European Patent Office
Office européen des brevets

(11) **EP 3 000 522 A1**

(12) **EUROPÄISCHE PATENTANMELDUNG**

(43) Veröffentlichungstag:
**30.03.2016  Patentblatt 2016/13**

(51) Int Cl.:
***B01D 53/10*** (2006.01)   ***B01D 53/50*** (2006.01)
***B01D 53/68*** (2006.01)

(21) Anmeldenummer: **15185262.1**

(22) Anmeldetag: **15.09.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **29.09.2014   DE 102014014053**
**16.12.2014   DE 102014118767**

(71) Anmelder: **RaNabi GmbH & Co. oHG**
**45356 Essen (DE)**

(72) Erfinder:
• **Morun, Dr. rer. nat. Bernd**
**45259 Essen (DE)**
• **Schmidt, Dipl.-Ing. Paul-Udo**
**45721 Haltern am See (DE)**
• **Knapp, Peter**
**45356 Essen (DE)**
• **Fertl, Patrick**
**45356 Essen (DE)**

(74) Vertreter: **Strehlke, Ingo Kurt**
**Von Rohr**
**Patentanwälte Partnerschaft mbB**
**Rüttenscheider Straße 62**
**45130 Essen (DE)**

(54) **VERFAHREN ZUR BEHANDLUNG VON ABGASEN**

(57)    Die vorliegende Erfindung betrifft ein Verfahren zur Behandlung von saure Bestandteile, insbesondere Schwefeloxide und Fluorwasserstoff, enthaltenden Abgasen, insbesondere Abgasen aus technischen Verbrennungsanlagen, insbesondere Rauchgasen, oder aus technischen Prozessen, zu Zwecken der Entfernung und/oder Abscheidung der sauren Bestandteile der Abgase oder zu Zwecken der Reduktion des Gehalts an sauren Bestandteilen, insbesondere des Gehalts an Schwefeloxiden und Fluorwasserstoff.

EP 3 000 522 A1

**Beschreibung**

Die vorliegende Erfindung betrifft das technische Gebiet der Behandlung von saure Bestandteile, insbesondere Schwefeloxide und Fluorwasserstoff, enthaltenden Abgasen, insbesondere Abgasen aus technischen Verbrennungsanlagen, insbesondere Rauchgasen, oder aus technischen Prozessen.

Insbesondere betrifft die vorliegende Erfindung ein Verfahren zur Behandlung von saure Bestandteile, insbesondere Schwefeloxide und Fluorwasserstoff, enthaltenden Abgasen, insbesondere Abgasen aus technischen Verbrennungsanlagen, insbesondere Rauchgasen, oder aus technischen Prozessen, zu Zwecken der Entfernung und/oder Abscheidung der sauren Bestandteile der Abgase oder zu Zwecken der Reduktion des Gehalts an sauren Bestandteilen, insbesondere des Gehalts an Schwefeloxiden und Fluorwasserstoff sowie eine Vorrichtung zur Durchführung des Verfahrens.

Des Weiteren betrifft die vorliegende Erfindung eine Zusammensetzung, insbesondere eine Abgasbehandlungszusammensetzung, zur Behandlung von Schwefeloxide und Fluorwasserstoff enthaltenden Abgasen.

Weiterhin betrifft die vorliegende Erfindung die Verwendung einer Zusammensetzung zur Behandlung von Schwefeloxide und Fluorwasserstoff enthaltenden Abgasen sowie ein Verfahren zur Herstellung einer Zusammensetzung, insbesondere einer Abgasbehandlungszusammensetzung, zur Behandlung von Schwefeloxide und Fluorwasserstoff enthaltenden Abgasen.

Unter Rauchgasen versteht man im allgemeinen Abgase aus ortsfesten, großtechnischen Verbrennungsanlagen, wie z. B. Gas- und Kohlekraftwerke oder Müllverbrennungsanlagen. Diese Abgase enthalten umwelt- und gesundheitsgefährdende Stoffe und müssen daher - nicht zuletzt zur Einhaltung der gesetzlichen Bestimmungen - gereinigt werden.

Bei den gasförmigen bzw. leichtflüchtigen Stoffen mit einem nicht unerheblichen Gefährdungspotential für Mensch und Umwelt, welche üblicherweise bei Verbrennungsprozessen entstehen, handelt es sich vornehmlich um Oxide des Kohlenstoffs, des Stickstoffs und des Schwefels sowie um Hydrogenchlorid und in zunehmendem Maße auch Hydrogenfluorid bzw. Fluorwasserstoff. Bei den Kohlenstoffoxiden handelt es sich um das als Treibhausgas bekannte Kohlendioxid sowie um das hochgiftige Kohlenmonoxid, welches in seiner Toxizität in etwa der Blausäure entspricht. Die Stickoxide, Schwefeloxide sowie Hydrogenchlorid und Fluorwasserstoff sind teilweise ebenfalls giftig und bilden allesamt bei Kontakt mit Wasser Säuren, welche als sogenannter saurer Regen zu einer Übersäuerung des Bodens führen. Die Stickoxide werden darüber hinaus in der Atmosphäre zu Nitraten umgesetzt und führen so zu einer Überdüngung bzw. Eutrophierung der Gewässer. Weitere Bestandteile der Rauchgase sind Feinstaub, Ruß und Flugasche, welche krebserregend und mit Schwermetallen belastet sein können sowie eine Rolle bei der Entstehung von Smog spielen. Weiterhin entstehen bei Verbrennungsprozessen oftmals auch organische Verbindungen wie z. B. hochtoxische Dioxine oder VOCs (Volatile Organic Compounds, d. h. leichtflüchtige organische Verbindungen), welche für die Bildung von bodennahem Ozon mitverantwortlich sind.

Im Stand der Technik sind Verfahren bekannt, mit denen die zuvor genannten Stoffe, mit Ausnahme des Kohlendioxids, aus den Rauchgasen entfernt werden können bzw. mit denen ihr Anteil deutlich verringert wird.

So wird zum Beispiel der Anteil des Kohlenmonoxids in den Rauchgasen durch eine gezielte Steuerung der Verbrennung gering gehalten. Weiterhin kann entstandenes Kohlenmonoxid in den Brennraum zurückgeführt oder in einer nachfolgenden Brennerstufe zu Kohlendioxid umgesetzt werden.

Ganz ähnlich wird der Anteil der Stickoxide in den Rauchgasen durch gezielte Steuerung der Bedingungen, unter welchen die Verbrennung stattfindet, gering gehalten. Alternativ kann jedoch auch eine Reduktion der Stickoxide mit stickstoffhaltigen Verbindungen, wie z. B. Ammoniak oder Harnstoff, zu elementarem Stickstoff durch Einsprühen bzw. Eindüsen der stickstoffhaltigen Substanzen in den Brennraum bei ca. 900 °C oder durch eine nachgeschaltete, katalytisch aktivierte Reaktion erfolgen.

Feinstaub, Ruß und Flugasche können durch Filtersystem, wie z. B. Schlauchfilter oder Elektrofilter, aus den Rauchgasen abgeschieden werden, während flüchtige organische Verbindungen (VOCs) durch Absorption an Aktivkohle oder durch Kondensation entfernt werden können.

Zur Abscheidung der Schwefeloxide aus den Rauchgasen ist im Stand der Technik eine Vielzahl von Verfahren bekannt. Es wird prinzipiell unterschieden zwischen regenerativen und nichtregenerativen Verfahren. Ein regeneratives Verfahren zur Rauchgasentschwefelung ist zum Beispiel das Wellmann-Lord-Verfahren, welches das Schwefeldioxid aus dem Rauchgas mit einer Natriumsulfitlösung zu Natriumhydrogensulfit umsetzt. Durch späteres Erwärmen des Natriumhydrogensulfits wird das Schwefeldioxid wieder frei und das Natriumsulfit kann anschließend zur erneuten Aufnahme von Schwefeldioxid genutzt werden. Insgesamt ist jedoch die Bedeutung der regenerativen Verfahren im Vergleich zu den nichtregenerativen Verfahren äußerst gering. Die nichtregenerativen Verfahren zielen alle darauf ab, Schwefeloxide durch chemische Umsetzung als Sulfate zu binden. Dies geschieht in der Kalkwäsche in Form von Gips ($CaSO_4 \cdot 2\,H_2O$), in der Trockensorption in Form von Natriumsulfat und im Ammoniak-REA-Verfahren (Walther-Verfahren) in Form von Ammoniumsulfat.

Die Verfahren des Standes der Technik zur Abscheidung bzw. Entfernung von Schwefeloxiden aus Rauchgasen besitzen allesamt gravierende Nachteile. Die Trockensorption, in deren Verlauf die Schwefeloxide mit Natriumhydrogencarbonat umgesetzt werden, ist hocheffektiv, jedoch aufgrund des relativ kostenintensiven Natriumhydrogencarbonats nicht kostengünstig durchzuführen. Diese Kosten verteuern den Prozess, in dem die schwefelhaltigen Rauchgase angefallen sind, und somit letztendlich auch die hergestellten Produkte.

Die Kalkwäsche, die mit einer Lösung bzw. Dispersion von Calciumhydroxid arbeitet, ist deutlich kostengünstiger durchzuführen, allerdings bei weitem nicht so effektiv wie die Trockensorption. Hierdurch werden große Mengen an Substanz benötigt, die den Prozess wiederum aufwendiger und kostenintensiver machen. Auch fallen Abwässer an, die ebenfalls gereinigt bzw. entsorgt werden müssen.

Das Ammoniak-REA-Verfahren besitzt keine große technische Bedeutung, da es die Nachteile der beiden zuvor genannten Verfahren vereinigt. Allerdings kann das gewonnene Ammoniumsulfat als Düngemittel eingesetzt werden.

Die zuvor genannten Verfahren zur Entschwefelung von Rauchgasen eignen sich auch zur Entfernung von Hydrogenhalogeniden, insbesondere Hydrogenchlorid und Hydrogenfluorid, aus den Abgasen, wobei insbesondere im Fall von Hydrogenfluorid Probleme im Hinblick auf die Reaktivitäten der Substanzen und unterschiedliche gesetzliche Grenzwerte beobachtet werden.

Darüber hinaus hat es sich als nachteilig erwiesen, dass bei dem genannten Verfahren die Schadstoffe nach Überführung in die Salzform oftmals dem Abwasser beigemischt oder anderweitig entsorgt werden, so dass hieraus keine neuen Rohstoffe bzw. Produkte generiert werden, was ökonomisch wie ökologisch nachteilig ist.

Zwar beschreibt die EP 2 411 123 A1 ein Verfahren zur Entschwefelung von Rauchgasen durch Trockensorption mit Natriumhydrogencarbonat, welches hervorragende Abscheideraten für Schwefeloxide und Hydrogenchlorid liefert und darüber hinaus eine weitgehende Rezyklierung der erhaltenen Rückstände erlaubt, jedoch ist es auch mit diesem Verfahren nicht möglich, sämtliche sauren und umwelttechnisch problematischen Bestandteile der Abgase vollständig zu entfernen bzw. so weit zu reduzieren, dass die gesetzlichen Grenzwerte stets eingehalten werden. Insbesondere bei Müllverbrennungsanlagen tritt aufgrund der zunehmend verbreiteten Verwendung von fluorhaltigen Polymeren das Problem relativ hoher Anteile an Fluorwasserstoff in den Abgasen auf. Verstärkt wird diese Problematik bei Sondermüllverbrennungsanlagen sowie Ersatzbrennstoffkraftwerken (EBS-Kraftwerken) beobachtet.

Um die derzeit gesetzlich vorgeschriebenen Reingaswerte, d. h. eine Schadstoffbelastung von Abgasen nach Abgasbehandlung, von 50 mg/$Nm^3$ (Tagesmittel) für Schwefeldioxid und 1 mg/$Nm^3$ (Tagesmittel) für Fluorwasserstoff zu erreichen, müssen Abscheidegrade an Fluorwasserstoff bei Spitzenbelastungen von bis zu 99,9 % erzielt werden. Dies erweist sich jedoch als technisch nur schwierig zu realisieren, da selbst bei den relativ hohen Fluorwasserstoffwerten, welche bei Sondermüllverbrennungsanlagen bzw. Ersatzbrennstoffkraftwerken auftreten, weniger als 1 % der Gesamtmenge der sauren Bestandteile der Abgase, d. h. der Summe aus Schwefeloxiden und Wasserstoffhalogeniden, auf Fluorwasserstoff zurückgeht und die Abgasbehandlungsreagenzien stets sowohl mit den in den Abgasen enthaltenden Schwefeloxiden als auch mit den Wasserstoffhalogeniden reagieren.

Um somit gerade die in den Spitzen auftretenden hohen Konzentrationen von Fluorwasserstoff in den Abgasen abzufangen, müssen die Betreiber der Großfeuerungsanlagen die Menge an Abgasbehandlungsreagenzien, wie beispielsweise Natriumhydrogencarbonat, erhöhen, was jedoch ökonomisch wie ökologisch wenig sinnvoll ist. Bei der Abscheidung mit festem Natriumhydrogencarbonat nehmen die Abscheideraten von Wasserstoffhalogeniden ab ca. 98 % Gesamtabscheidung und von Schwefeldioxid ab ca. 97 % Gesamtabscheidung einen asymptotischen Verlauf an, d. h. die jeweils eingesetzte Menge an Abgasbehandlungsreagenz muss beträchtlich erhöht werden, um auch nur geringe Steigerungen in der Abscheidung zu erzielen. Dies führt zu einer Ansammlung von nicht umgesetzten Abgasbehandlungsreagenz in den Rückständen der Abgasbehandlung, welche aufwendig entsorgt werden müssen. Auch eine Wiederverwendung bzw. Rezyklierung ist mit diesen komplexen Stoffgemischen nicht ohne Weiteres möglich.

Um diesem Nachteil zu begegnen, wird im Stand der Technik oftmals ein weiterer Abgasbehandlungsschritt, welcher auf der Einbringung von festem Calciumhydroxid in den Abgasstrom beruht, durchgeführt. Calciumhydroxid reagiert gut mit Wasserstoffhalogeniden, insbesondere Fluorwasserstoff und Chlorwasserstoff, jedoch nur mäßig mit Schwefeloxiden und Kohlendioxid. Auf diese Weise ist es möglich, die Belastung der Abgase mit Fluorwasserstoff zu senken. Die Anwendung einer weiteren Abgasbehandlungsstufe bzw. eines weiteren Abgasbehandlungsschrittes erhöht jedoch den Aufwand bzw. die Kosten der Abgasbehandlung insgesamt beträchtlich. So müssen separate Lagerstätten, Dosiereinrichtungen sowie Eindüseinrichtungen für das Calciumhydroxid bereitgestellt werden, was zum einen die Investitionskosten erhöht, aber auch die laufenden Kosten für Wartung und Unterhalt in die Höhe treibt. Darüber hinaus reagiert Calciumhydroxid auch mit Chlorwasserstoff, Schwefeldioxid und Kohlendioxid aus den Abgasen, wenngleich Schwefeldioxid und Kohlendioxid nur in geringem Maße umgesetzt werden. Weiterhin wird durch die Anwendung eines weiteren Abgasbehandlungsschrittes eine deutlich komplexere Steuerung der Abgasbehandlung notwendig, da die einzelnen Abgasbehandlungsstufen bzw. Verfahrensschritte aufeinander abgestimmt sein müssen, was wiederum die Kosten erhöht.

Der vorliegenden Erfindung liegt daher nunmehr die Aufgabe zugrunde, ein Verfahren zur Behandlung von saure Gase enthaltenden Abgasen, insbesondere Abgasen aus technischen Verbrennungsanlagen, insbesondere Rauchgasen oder aus technischen Prozessen, zu Zwecken der Entfernung und/oder Abscheidung der sauren Bestandteile oder zu Zwecken der Reduktion des Gehalts an sauren Bestandteilen zur Verfügung zu stellen, welches die zuvor geschilderten Nachteile der Verfahren des Standes der Technik zumindest weitgehend vermeidet oder aber wenigstens abschwächt.

Darüber hinaus ist es eine Aufgabe der vorliegenden Erfindung, ein möglichst einfaches Verfahren zur Entfernung bzw. Reduktion von Schwefeloxiden und Wasserstoffhalogeniden, insbesondere Fluorwasserstoff und Chlorwasserstoff, bereitzustellen, welches mit nur einem Verfahrensschritt bei der Behandlung der Abgase auskommt und mit möglichst geringen Investitionen und laufenden Kosten durchzuführen ist.

Darüber hinaus ist eine weitere Aufgabe der vorliegenden Erfindung die Bereitstellung und Herstellung einer geeigneten Abgasbehandlungszusammensetzung, insbesondere von Abgasbehandlungsreagenzien oder deren Mischungen, mit welcher das erfindungsgemäße Verfahren möglichst effizient durchgeführt werden kann.

Zur Lösung der zuvor geschilderten Aufgabe schlägt die vorliegende Erfindung gemäß einem ersten Erfindungsaspekt ein Verfahren nach Patentanspruch 1 vor; weitere vorteilhafte Ausgestaltungen sind Gegenstand der diesbezüglichen abhängigen Patentansprüche.

Weiterer Gegenstand der vorliegenden Erfindung ist gemäß einem zweiten Erfindungsaspekt eine Vorrichtung zur Durchführung des erfindungsgemäßen Verfahrens nach Patentanspruch 11.

Wiederum weiterer Gegenstand der vorliegenden Erfindung ist eine Zusammensetzung nach Patentanspruch 12; weitere vorteilhafte Ausgestaltungen sind Gegenstand des diesbezüglichen abhängigen Patentanspruchs.

Wiederum weiterer Gegenstand der vorliegenden Erfindung ist die Verwendung einer Zusammensetzung nach Patentanspruch 14.

Schließlich ist wiederum weiterer Gegenstand der vorliegenden Erfindung ein Verfahren zur Herstellung einer Zusammensetzung, insbesondere einer Abgasbehandlungszusammensetzung, nach Patentanspruch 15.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Gegenstand der vorliegenden Erfindung ist somit - gemäß einem **ersten** Aspekt der vorliegenden Erfindung - ein Verfahren zur Behandlung von saure Bestandteile, insbesondere Schwefeloxide und Fluorwasserstoff (aber auch Chlorwasserstoff), enthaltenden Abgasen, insbesondere Abgasen aus technischen Verbrennungsanlagen, insbesondere Rauchgasen, oder aus technischen Prozessen, zu Zwecken der Entfernung und/oder Abscheidung der sauren Bestandteile der Abgasen oder zu Zwecken der Reduktion des Gehalts an sauren Bestandteilen, wobei mindestens zwei unterschiedliche Abgasbehandlungsreagenzien zur Behandlung der Abgase in Form eines ersten Abgasbehandlungsreagenzes (Abgasbehandlungsreagenz 1) und eines zweiten Abgasbehandlungsreagenzes (Abgasbehandlungsreagenz 2) gemeinsam in den Strom der Abgase eingebracht werden und/oder mit dem Strom der Abgase in Kontakt gebracht werden.

Das erfindungsgemäße Verfahren hat den Vorteil, dass die gemeinsame Einbringung bzw. das gemeinsame Inkontaktbringen von zwei unterschiedlichen Abgasbehandlungsreagenzien in den Abgasstrom bzw. mit dem Abgasstrom nur eine Abgasbehandlungsstufe bzw. einen Verfahrensschritt zur Entfernung bzw. Reduktion der sauren Bestandteile der Abgase erforderlich macht. Das heißt die Abgasbehandlungsreagenzien können zusammen verarbeitet werden, wodurch die Verwendung nur einer Vorrichtung bzw. Einrichtung zum Mahlen der Abgasbehandlungsreagenzien und eine Vorrichtung bzw. Einrichtung zu deren Einbringung in den Rauchgasstrom verwendet werden muss. Falls die Abgasbehandlungsreagenzien in Form eines zuvor festgelegten Gemisches verwendet werden, muss auch nur eine Lagerstätte bzw. ein Silo bereitgestellt und unterhalten werden, was Aufwand, Zeit und somit letztlich Kosten spart.

Darüber hinaus erlaubt es die geeignete Auswahl der Abgasbehandlungsreagenzien, die Menge der eingesetzten Abgasbehandlungsreagenzien möglichst gering zu halten und nahezu quantitative Umsätze der jeweiligen Abgasbehandlungsreagenzien zu erzielen, wobei die vorgegebenen Zielwerte bzw. Reinheitsgrade für das behandelte Abgas eingehalten werden. Bei der Durchführung des erfindungsgemäßen Verfahrens in Form einer Trockensorption bzw. Trockenwäsche fallen darüber hinaus bei der Abgasbehandlung keine kontaminierten Abwässer an, wie sie beispielsweise im Fall einer Nasswäsche erhalten werden und aufwendig entsorgt werden müssen.

Wie zuvor ausgeführt, werden im Rahmen der vorliegenden Erfindung mindestens zwei unterschiedliche Abgasbehandlungsreagenzien verwendet. Dies bedeutet, dass voneinander verschiedene Abgasbehandlungsreagenzien mit insbesondere unterschiedlicher chemischer Zusammensetzung verwendet werden, wobei jedes Abgasbehandlungsreagenz vorzugsweise aus einer chemischen Verbindung besteht und/oder eine spezifische chemische Verbindung als Hauptbestandteil enthält.

Unter den sauren Bestandteilen der Abgase sollen im Rahmen der vorliegenden Erfindung chemische Verbindungen verstanden werden, welche insbesondere bei Kontakt mit Wasser als Brönsted-Säuren reagieren. Dies betrifft insbesondere Halogenwasserstoffe sowie Schwefeloxide. Mit dem erfindungsgemäßen Verfahren werden keine Stickoxide aus den Rauchgasen entfernt und auch eine Reaktion mit Kohlendioxid kommt allein als - zumeist unerwünschte - Nebenreaktion vor. Zur Entfernung dieser Bestandteile der Rauchgase werden andere Verfahren angewendet, welche mit dem erfindungsgemäßen Verfahren kombinierbar sind.

Im Allgemeinen wird das erfindungsgemäße Verfahren derart durchgeführt, dass die Behandlung der Abgase durch chemische Umsetzung der sauren Bestandteile der Abgase erfolgt. Die Abgase werden somit im Rahmen der vorliegenden Erfindung durch chemische Reaktion in neue Stoffe bzw. Verbindungen überführt, insbesondere in Salze.

In diesem Zusammenhang hat es sich bewährt, wenn die Umsetzung der sauren Bestandteile der Abgase unter oxidierenden Bedingungen und/oder in Gegenwart von Sauerstoff erfolgt. Eine Umsetzung der Abgase bzw. der sauren Bestandteile der Abgase unter oxidierenden Bedingungen bzw. in Gegenwart von Sauerstoff ermöglicht insbesondere die Abscheidung von Schwefeloxiden in Form von Sulfaten.

Üblicherweise werden im Rahmen der vorliegenden Erfindung die Abgasbehandlungsreagenzien zur Behandlung der Abgase als Feststoffe und/oder als Feststoffgemisch, insbesondere in Form von Pulvern, eingesetzt. Das erfindungsgemäße Verfahren wird folglich bevorzugt als Trockensorptionsverfahren bzw. als Trockenwäsche durchgeführt, da auf diese Weise Wasser- und Energiekosten eingespart werden können und sich die zu entsorgende Abfallmenge im Vergleich zu einer Nasswäsche deutlich reduziert.

Besonders gute Ergebnisse werden im Rahmen der vorliegenden Erfindung erhalten, wenn die Abgasbehandlungsreagenzien zur Behandlung der Abgase als Abgasbehandlungszusammensetzung bereitgestellt werden und/oder die Abgasbehandlungsreagenzien zur Behandlung der Abgase vor Einbringung in den Abgasstrom gemischt werden.

Ein Vorteil der gemeinsamen Bereitstellung bzw. des Mischens der Abgasbehandlungsreagenzien vor Inkontaktbringen mit dem Abgasstrom oder vor Einbringen in den Abgasstrom besteht darin, dass insbesondere bei Verwendung von festen Abgasbehandlungsreagenzien nur eine Mahleinrichtung verwendet werden muss und die Mischung der Abgasbehandlungsreagenzien gemeinsam d. h. über nur eine Eindüseinrichtung bzw. nur eine Anordnung von Eindüseinrichtungen in den Abgasstrom eingebracht wird. Hierbei verringern sich die Investitionskosten ganz erheblich und die Steuerung des Abgasbehandlungsverfahrens wird deutlich vereinfacht. Im Rahmen der vorliegenden Erfindung wird es dabei bevorzugt, wenn die Abgasbehandlungsreagenzien in Form einer Zusammensetzung, insbesondere eine Abgasbehandlungszusammensetzung, bereitgestellt werden, d. h. sozusagen vorkonfektioniert vorliegen. Diese spezielle und bevorzugte Ausführungsform der vorliegenden Erfindung vereinfacht die Steuerung des Abgasbehandlungsverfahrens außerordentlich und ist mit dem bestehenden Anlagen, welche auf einer Entschwefelung von Rauchgasen mittels Trockensorption bzw. Trockenwäsche beruhen, durchführbar, ohne dass die Betreiber der Feuerungsanlagen zusätzliche Investitionen tätigen müssten.

Im Rahmen der vorliegenden Erfindung hat es sich bewährt, wenn die Abgasbehandlungsreagenzien zur Behandlung der Abgase in feiner Verteilung mit den Abgasen in Kontakt gebracht werden, insbesondere in den Strom der Abgase eingedüst und/oder eingesprüht werden. Eine feine Verteilung der insbesondere festen Abgasbehandlungsreagenzien führt zu einer sehr großen reaktiven Oberfläche, d. h. die in den Abgasstrom eingebrachten Abgasbehandlungsreagenzien werden möglichst vollständig umgesetzt und somit effizient genutzt, d. h. sowohl die Notwendigkeit von Überdosierungen als auch der Anfall von nichtumgesetzten Abgasbehandlungsreagenzien werden folglich minimiert.

Was die Temperaturen anbelangt, bei welchen das erfindungsgemäße Verfahren durchgeführt wird, so können diese in weiten Bereichen variieren. Im Rahmen der vorliegenden Erfindung hat es sich jedoch bewährt, wenn die die sauren Bestandteile enthaltenden Abgase in noch heißem Zustand, insbesondere bei Temperaturen im Bereich von 50 bis 1.000 °C, vorzugsweise 100 bis 300 °C, mit den Abgasbehandlungsreagenzien in Kontakt gebracht werden. In den vorgenannten Temperaturbereichen wird zum einen eine möglichst gute Reaktionskinetik, d. h. eine möglichst schnelle Umsetzung der Abgasbehandlungsreagenzien erzielt. Zum anderen wird beispielsweise bei Verwendung von Natriumhydrogencarbonat als Abgasbehandlungsreagenz, dieses *in situ* im Abgasstrom in hochreaktives Natriumcarbonat umgewandelt, wodurch eine nochmals erhöhter Abscheidegrad erreicht werden kann.

Üblicherweise ist im Rahmen der vorliegenden Erfindung mindestens eines der Abgasbehandlungsreagenzien basisch. Bevorzugt wird es jedoch, wenn mindestens zwei Abgasbehandlungsreagenzien, vorzugsweise alle Abgasbehandlungsreagenzien, basisch sind. Unter einem basischen Abgasbehandlungsreagenz ist dabei im Rahmen der vorliegenden Erfindung ein Reagenz bzw. eine chemische Verbindung zu verstehen, welche mit den sauren Bestandteilen der Abgase zu reagieren vermag.

Gemäß einer bevorzugten Ausführungsform der vorliegenden Erfindung werden als Abgasbehandlungsreagenzien zur Behandlung der Abgase mindestens zwei unterschiedliche Carbonate und/oder Hydrogencarbonate, insbesondere mindestens ein Carbonat und mindestens ein Hydrogencarbonat, eingesetzt. Carbonate und Hydrogencarbonate weisen eine hervorragende Reaktionskinetik in Bezug auf die sauren Bestandteile der Abgase auf und reagieren unter Freisetzung von Kohlendioxid, wodurch die Oberfläche der Abgasbehandlungsreagenzien nochmals vergrößert wird. Darüber hinaus werden als Rückstand der Abgasbehandlung üblicherweise stabile Salze erhalten.

Im Rahmen der vorliegenden Erfindung werden gleichfalls gute Ergebnisse erhalten, wenn mindestens eines der Abgasbehandlungsreagenzien, insbesondere das erste Abgasbehandlungsreagenz, zur Behandlung der Abgase auf Basis einer Alkali-Verbindung, insbesondere auf Basis eines Alkali-Salzes ausgebildet ist, und/oder wenn mindestens eines der Abgasbehandlungsreagenzien, insbesondere das zweite Abgasbehandlungsreagenz, zur Behandlung der Abgase auf Basis einer Erdalkaliverbindung, insbesondere eines Erdalkali-Salzes, ausgebildet ist.

In diesem Zusammenhang hat es sich bewährt, wenn mindestens eines der Abgasbehandlungsreagenzien, insbesondere das erste Abgasbehandlungsreagenz, zur Behandlung der Abgase ein Alkalihydrogencarbonat und/oder Alkalicarbonat, insbesondere Natriumhydrogencarbonat und/oder Natriumcarbonat, vorzugsweise Natriumhydrogencarbonat, ist. Natriumhydrogencarbonat eignet sich hervorragender Weise zur Trockenwäsche von Rauchgasen, da es bei Einbringen in den Rauchgasstrom *in situ* zu feinsten Natriumcarbonatpartikeln reagiert, welche wiederum selektiv mit Schwefeloxiden sowie Halogenwasserstoffen, nicht jedoch mit weiteren Bestandteilen der Rauchgase, wie beispielsweise nitrosen Gasen oder Kohlendioxid, reagieren und diese Stoffe aus den Rauchgasen entfernen.

Darüber hinaus werden im Rahmen der vorliegenden Erfindung besonders gute Ergebnisse erhalten, wenn mindestens eines der Abgasbehandlungsreagenzien, insbesondere das zweite Abgasbehandlungsreagenz, zur Behandlung der Abgase ein Calciumsalz, insbesondere Calciumhydroxid und/oder Calciumcarbonat, vorzugsweise Calciumcarbonat, ist. Calciumsalze reagieren sehr gut und rasch mit Halogenwasserstoffen, insbesondere Fluorwasserstoff, und - zumindest im Rahmen von Trockensorption bzw. Trockenwäschen - nur mäßig mit Schwefeloxiden. Insbesondere Calciumcarbonat reagiert sehr rasch und selektiv mit Fluorwasserstoff, deutlich weniger schnell mit Chlorwasserstoff und nur sehr mäßig mit Schwefeloxiden. Gegenüber Calciumhydroxid hat Calciumcarbonat darüber hinaus auch den weiteren Vorteil, dass es nicht mit Kohlendioxid reagiert, was bei Calciumhydroxid, wenngleich nur in geringerem Maße, beobachtet wird.

Was nunmehr die Verhältnisse der Abgasbehandlungsreagenzien zueinander anbelangt, so können diese in weiteren Bereichen variieren. Besonders gute Ergebnis werden im Rahmen der vorliegenden Erfindung jedoch erhalten, wenn die Abgasbehandlungsreagenzien zur Behandlung der Abgase in einem gewichtsbezogenen Verhältnis des ersten Abgasbehandlungsreagenzes (Abgasbehandlungsreagenz 1) zum zweiten Abgasbehandlungsreagenz (Abgasbehandlungsreagenz 2), insbesondere von Natriumhydrogencarbonat zu Calciumcarbonat, im Bereich von 7 : 1 bis 10.000 : 1, insbesondere 10 : 1 bis 5.000 : 1, vorzugsweise 15 : 1 bis 2.000 : 1, bevorzugt 20 : 1 bis 1.000 : 1, besonders bevorzugt 30 : 1 bis 500 : 1, eingesetzt werden.

Im Rahmen der vorliegenden Erfindung hat es sich bewährt, wenn die Menge des ersten Abgasbehandlungsreagenzes (Abgasbehandlungsreagenz 1) im Bereich von 80 bis 99,99 Gew.-%, insbesondere 85 bis 99,98 Gew.-%, vorzugsweise 90 bis 99,95 Gew.-%, bevorzugt 92 bis 99,93 Gew.-%, besonders bevorzugt 95 bis 99,9 Gew.-%, ganz besonders bevorzugt 97 bis 99,7 Gew.-%, bezogen auf das Gesamtgewicht der Abgasbehandlungsreagenzien, variiert wird.

Darüber hinaus werden im Rahmen der vorliegenden Erfindung besonders gute Ergebnisse erhalten, wenn die Menge des zweiten Abgasbehandlungsreagenzes (Abgasbehandlungsreagenz 2) im Bereich von 0,01 bis 20 Gew.-%, insbesondere 0,02 bis 15 Gew.-%, vorzugsweise 0,05 bis 10 Gew.-%, bevorzugt 0,07 bis 8 Gew.-%, besonders bevorzugt 0,1 bis 5 Gew.-%, ganz besonders bevorzugt 0,3 bis 3 Gew.-%, bezogen auf das Gesamtgewicht der Abgasbehandlungsreagenzien, variiert wird.

Es hat sich gezeigt, dass in den vorgenannten Verhältnissen bzw. Mengenbereichen Mischungen von speziell ausgewählten Abgasbehandlungsreagenzien besonders effizient zur Entfernung von Schwefeloxiden und Halogenwasserstoffen aus Rauchgasen verwendet werden können. Dies gilt insbesondere für die Verwendung vorkonfektionierter bzw. zuvor festgelegter Mischungsverhältnisse der einzelnen Abgasbehandlungsreagenzien zueinander. Auch hier hat sich überraschenderweise gezeigt, dass bei Verwendung fester Verhältnisse der Abgasbehandlungsreagenzien zueinander hocheffiziente Abgasbehandlungsverfahren durchgeführt werden können, welche es erlauben, die gesetzlichen Höchstwerte für das Reingas einzuhalten und zum Großteil wiederverwertbare Rückstände zu erhalten.

Im Rahmen der vorliegenden Erfindung hat sich darüber hinaus erwiesen, dass gleichfalls sehr gute Ergebnisse bei der Abgasbehandlung erzielt werden können, wenn die Abgasbehandlungsreagenzien zur Behandlung der Abgase einen Reinheitsgrad im Bereich von 75 bis 100 Gew.-%, insbesondere 80 bis 99 Gew.-%, vorzugsweise 85 bis 98 Gew.-%, bevorzugt 90 bis 95 Gew.-%, bezogen auf das Gewicht der jeweiligen Abgasbehandlungsreagenzien aufweisen. Im Rahmen der vorliegenden Erfindung können somit hervorragende Ergebnisse mit Abgasbehandlungsreagenzien erzielt werden, welche deutliche Anteile an Verunreinigungen aufweisen, d. h. es ist nicht notwendig, hochreine Abgasbehandlungsreagenzien zu verwenden. Dies senkt zum einen die Beschaffungskosten für die Abgasbehandlungsreagenzien und erlaubt es darüber hinaus auch, wiederverwertetes bzw. recyceltes Abgasbehandlungsreagenz zu verwenden, wodurch die Effizienz des erfindungsgemäßen Verfahrens nochmals deutlich erhöht wird.

Im Rahmen der vorliegenden Erfindung ist es vorteilhafterweise vorgesehen, die bei der Umsetzung der Abgasbehandlungsreagenzien mit den sauren Bestandteilen der Abgase entstehenden Produkte weiterzuverarbeiten und nach Möglichkeit zu rezyklieren, d. h. zur Herstellung von neuem Abgasbehandlungsreagenz zu verwenden. Gemäß einer bevorzugten Ausführungsform der vorliegenden Erfindung ist es daher vorgesehen, das erfindungsgemäße Verfahren als Verfahren zur Behandlung von Schwefeloxide und Fluorwasserstoff enthaltenden Abgasen, insbesondere Abgasen aus technischen Verbrennungsanlagen, insbesondere Rauchgasen, oder aus technischen Prozessen, zu Zwecken der Entfernung und/oder Abscheidung von Schwefeloxiden oder Fluorwasserstoff oder zu Zwecken der Reduktion des Gehalts an Schwefeloxiden und Fluorwasserstoff durchzuführen, insbesondere wie zuvor beschrieben, wobei in einem ersten Verfahrensschritt (a) mindestens zwei unterschiedliche Abgasbehandlungsreagenzien zur Behandlung der Abgase in Form eines ersten Abgasbehandlungsreagenzes (Abgasbehandlungsreagenz 1) und eines zweiten Abgasbehandlungsreagenzes (Abgasbehandlungsreagenz 2) gemeinsam in den Strom der Abgase eingebracht und chemisch unter oxidierenden Bedingungen und/oder in Gegenwart von Sauerstoff mit den Schwefeloxiden und Fluorwasserstoff umgesetzt werden, wobei das erste Abgasbehandlungsreagenz (Abgasbehandlungsreagenz 1) ein Alkalihydrogencarbonat und/oder -carbonat ist und durch Reaktion mit Schwefeloxiden zu Alkalisulfat umgesetzt wird und wobei das zweite Abgasbehandlungsreagenz (Abgasbehandlungsreagenz 2) ein Erdalkalisalz, insbesondere ein Calciumsalz, ist und durch Reaktion mit Fluorwasserstoff zu Erdalkalifluorid, insbesondere Calciumfluorid, umgesetzt wird.

Das erfindungsgemäße Verfahren stellt gemäß dieser Ausführungsform einen umfassenden Entsorgungs- und Recyclingprozess dar.

Unter dem Begriff "Alkali" sollen im Rahmen der vorliegenden Erfindung die Elemente der ersten Hauptgruppe des Periodensystems der Elemente, synonym auch als Alkalimetalle bezeichnet, bestehend aus den Elementen Lithium (Li), Natrium (Na), Kalium (K), Rubidium (Rb) und Caesium (Cs) bzw. ihre Kationen, verstanden werden. Unter der "Erdalkali" sollen im Rahmen der vorliegenden Erfindung die Elemente der zweiten Hauptgruppe des Periodensystems der Elemente, synonym als Erdalkalimetalle bezeichnet, bestehend aus den Elementen Beryllium (Be), Magnesium (Mg), Calcium (Ca), Strontium (Sr) und Barium (Ba) bzw. ihre Kationen, verstanden werden.

Üblicherweise wird das aus Verfahrensschritt (a) erhaltene Erdalkalifluorid, insbesondere Calciumfluorid, aus dem Verfahren ausgeschleust.

Im Rahmen der vorliegenden Erfindung werden besonders gute Ergebnisse erhalten, wenn als Calciumsalz Calciumhydroxid und/oder Calciumcarbonat, insbesondere Calciumcarbonat, eingesetzt wird. Wie zuvor bereits ausgeführt, besitzen die Calciumsalze eine erhöhte spezifische Reaktion gegenüber Fluorwasserstoff, wobei insbesondere Calciumcarbonat mit Schwefeloxiden nur mäßig und mit Kohlendioxid überhaupt nicht reagiert.

Gemäß einer bevorzugten Ausführungsform der vorliegenden Erfindung wird nachfolgend in einem zweiten Verfahrensschritt (b) das erhaltene Alkalisulfat mit mindestens einem Calciumhalogenid, vorzugsweise Calciumchlorid, zu Calciumsulfat, vorzugsweise in Form von Gips, und Alkalihalogenid, insbesondere Alkalichlorid, umgesetzt. Das erhaltene Calciumsulfat kann aus dem Verfahren ausgeschleust werden und beispielsweise als Baustoff oder bei der Zementherstellung weiterverwendet werden.

Gemäß einer bevorzugten Ausführungsform des erfindungsgemäßen Verfahrens wird die Umsetzung des Alkalisulfats mit dem Calciumhalogenid in Verfahrensschritt (b) mit einem Überschuss, insbesondere einem molaren Überschuss, an Calciumhalogenid, bezogen auf die Menge an Alkalisulfat, durchgeführt. Durch den Überschuss an Calciumhalogenid, insbesondere Calciumchlorid, wird erreicht, dass nicht sämtliches Calciumhalogenid zu Calciumsulfat reagiert und aus dem Verfahren ausgeschleust wird, sondern dass Calciumverbindungen im weiterzuverarbeitenden Gemisch verbleiben, und zu einem späteren Zeitpunkt zu Calciumcarbonat umgesetzt werden können, insbesondere in Kombination mit der simultanen Herstellung von Natriumhydrogencarbonat. Im Rahmen der vorliegenden Erfindung ist es somit möglich, eine Abgasbehandlungszusammensetzung, bestehend aus zwei unterschiedlichen Abgasbehandlungsreagenzien, in einem einzigen Herstellungsverfahren herzustellen.

Im Rahmen der vorliegenden Erfindung hat es sich als besonders vorteilhaft erwiesen, wenn als Alkalihydrogencarbonat und/oder -carbonat, vorzugsweise Alkalihydrogencarbonat, Natriumhydrogencarbonat und/oder -carbonat, vorzugsweise Natriumhydrogencarbonat, eingesetzt wird und/oder dass im Verfahrensschritt (a) als Alkalisulfat Natriumsulfat erhalten wird und/oder dass im Verfahrensschritt (b) als Alkalihalogenid, insbesondere Alkalichlorid ein Natriumhalogenid, insbesondere Natriumchlorid, erhalten wird.

Die Durchführung des erfindungsgemäßen Verfahrens mit natriumhaltigen Alkaliverbindungen ist insbesondere im Hinblick auf die Reaktivitäten und Löslichkeiten der Alkaliverbindungen sowie der entstehenden Kosten in der Anschaffung bzw. hinsichtlich der Prozessführung bevorzugt.

Die Verfahrensschritte (a) und (b) des erfindungsgemäßen Verfahrens werden nachfolgend exemplarisch durch die Reaktionen (1) und (2) dargestellt und erläutert.

Verfahrensschritt (a) wird in den Reaktionen (1) und (2) beispielhaft dargestellt. In Reaktion (1) wird Natriumhydrogencarbonat ($NaHCO_3$) mit Schwefeldioxid ($SO_2$) in Gegenwart von Sauerstoff ($O_2$) zu Natriumsulfat ($Na_2SO_4$), Kohlendioxid ($CO_2$) und Wasser ($H_2O$) umgesetzt:

$$2\,\mathrm{NaHCO_3} + \mathrm{SO_2} + \frac{1}{2}\,\mathrm{O_2} \rightarrow \mathrm{Na_2SO_4} + 2\,\mathrm{CO_2} + \mathrm{H_2O} \tag{1}$$

In Reaktion (2) wird Calciumcarbonat ($CaCO_3$) mit Fluorwasserstoff (HF) zu Calciumfluorid ($CaF_2$), Kohlendioxid und Wasser umgesetzt:

$$CaCO_3 + 2\,HF \rightarrow CaF_2 + CO_2 + H_2O \tag{2}$$

Verfahrensschritt (b) wird in Reaktion (3) am Beispiel der Umsetzung von Natriumsulfat mit Calciumchlorid ($CaCl_2$) in Gegenwart von Wasser zu Calciumsulfat-Dihydrat (Gips, $CaSO_4 \cdot 2\,H_2O$) und Natriumchlorid (NaCl) verdeutlicht:

$$Na_2SO_4 + CaCl_2 + 2\,H_2O \rightarrow CaSO_4 \cdot 2\,H_2O + 2\,NaCl \tag{3}$$

Die einzelnen Verfahrensschritte des erfindungsgemäßen Verfahrens werden im allgemeinen bei Atmosphärendruck, d. h. bei Drücken von etwa 1 bar durchgeführt, wobei eine Verfahrensführung grundsätzlich auch bei reduzierten oder erhöhten Drücken möglich ist.

Was die Temperatur der Schwefeloxide und Fluorwasserstoff enthaltenden Abgase im noch heißen Zustand anbelangt, so kann diese im Rahmen der vorliegenden Erfindung in weiten Bereichen variieren. Im Allgemeinen liegt die Temperatur der Abgase im Bereich von 50 °C und 1.000 °C, vorzugsweise im Bereich von 100 °C bis 300 °C. In diesen Temperaturbereichen ist eine optimale Umsetzung der Schwefeloxide mit dem pulverförmigen Alkalihydrogencarbonat und/oder -carbonats gegeben, wobei insbesondere bei Verwendung von Alkalihydrogencarbonat dieses bei Kontakt mit den Abgasen im heißen Zustand zu feinst verteiltem Alkalicarbonat reagieren kann. Durch die Entstehung feinster Partikel mit großen spezifischen Oberflächen wird eine nahezu vollständige Umsetzung des eingesetzten Alkalihydrogencarbonats mit den Schwefeloxiden erreicht. Anwendungsbezogen oder einzelfallbedingt ist es jedoch nicht ausgeschlossen, von den vorgenannten Temperaturwerten abzuweichen, ohne daß der Rahmen der vorliegenden Erfindung verlassen ist; dies zu entscheiden liegt im fachmännischen Können bzw. im Ermessen des auf diesem Gebiet tätigen Fachmanns.

Weiterhin hat es sich erfindungsgemäß als besonders vorteilhaft herausgestellt, wenn in Verfahrensschritt (b) das Alkalisulfat, vorzugsweise in Form einer insbesondere wässrigen Lösung oder Dispersion, mit einer vorzugsweise wässrigen Lösung oder Dispersion des Calciumhalogenids in Kontakt gebracht wird. Zudem kann es vorgesehen sein, dass das in Verfahrensschritt (a) erhaltene, insbesondere feste Alkalisulfat in eine insbesondere wässrige Lösung oder Dispersion gebracht und/oder überführt wird, welche dann mit einer vorzugsweise wässrigen Lösung oder Dispersion des Calciumhalogenids in Kontakt gebracht wird. Durch Lösen bzw. Dispergieren des Alkalisulfats, vorzugsweise in Wasser, können die bei der Schwefeloxidabscheidung mitgerissenen festen Verbrennungsrückstände, insbesondere in Form von Feinstaub, Ruß und Flugasche, wieder von dem Alkalisulfat getrennt werden, z. B. durch Flotation, Zentrifugieren, Filtrieren etc.

Im allgemeinen wird das in Verfahrensschritt (b) erhaltene Calciumsulfat abgetrennt und/oder aus dem Verfahren ausgeschleust. Sofern Verfahrensschritt (b) im wässrigen Medium durchgeführt wird, so fällt das entstehende Calciumsulfat in Form von Gips an. Der bei der Rauchgasentschwefelung erhaltene Gips ist hochrein und auch unter dem Namen REA-Gips (Rauchgas-Entschwefelungs-Anlagen-Gips) bekannt und findet vielfältige Anwendung wie im Bereich der Bauindustrie, wobei hier insbesondere Verkleidungsplatten aus Gips, die sogenannten REA-Gipsplatten, erwähnt werden können.

Was den Temperaturbereich anbelangt, in welchem Verfahrensschritt (b) durchgeführt wird, so kann dieser auch in weiten Bereichen variieren. Im allgemeinen liegt die Temperatur bei der Durchführung des Verfahrensschritts (b) im Bereich von 10 °C bis 90 °C, insbesondere 15 °C bis 60 °C, bevorzugt 20 °C bis 40 °C. In diesem Temperaturbereich ist die Ausbeute der Umsetzung optimal bzw. lässt sich das erhaltene Calciumsulfat ohne weiteres abtrennen. Dennoch ist es anwendungsbezogen oder einzelfallbedingt nicht ausgeschlossen, von den vorgenannten Werten abzuweichen, ohne dass der Rahmen der vorliegenden Erfindung verlassen ist; dies zu entscheiden liegt im fachmännischen Können bzw. im Ermessen des auf diesem Gebiet tätigen Fachmanns.

Gemäß einer besonders bevorzugten Ausführungsform der vorliegenden Erfindung wird das in Verfahrensschritt (b) erhaltene Alkalihalogenid, insbesondere Alkalichlorid, in einem nachfolgenden Verfahrensschritt (c) zu Alkalihydrogencarbonat und/oder -carbonat, insbesondere Alkalihydrogencarbonat, vorzugsweise Natriumhydrogencarbonat, umgesetzt.

Hierbei kann es vorgesehen sein, dass das Alkalihalogenid, insbesondere Alkalichlorid, unter Zusatz von bzw. Inkontaktbringen mit Kohlendioxid und Ammoniak zu Alkalihydrogencarbonat und/oder -carbonat, insbesondere Alkalihydrogencarbonat, vorzugsweise Natriumhydrogencarbonat, umgesetzt wird. In diesem Zusammenhang kann in Verfahrensschritt (c) das Alkalihalogenid, insbesondere Alkalichlorid, in Form einer vorzugsweise wässrigen Lösung oder Dispersion eingesetzt werden. Gleichermaßen kann es erfindungsgemäß vorgesehen sein, dass das Kohlendioxid und/oder der Ammoniak in gasförmiger Form eingesetzt wird bzw. werden. Gemäß einer bevorzugten Ausführungsform der vorliegenden Erfindung wird in Verfahrensschritt (b) nicht umgesetztes, insbesondere überschüssiges, Calciumhalogenid, insbesondere Calciumchlorid, in Verfahrensschritt (c) zu Calciumcarbonat umgesetzt. Das Calciumhalogenid, insbesondere Calciumchlorid, reagiert unter den gleichen Bedingungen wie das Alkalihalogenid, insbesondere Natriumchlorid, im Basischen in Gegenwart von Kohlendioxid zu Calciumcarbonat ($CaCO_3$). Durch die gezielte Steuerung des Überschusses an Calciumchlorid in Verfahrensschritt (b) ist es somit möglich, durch eine einfache Fällungsreaktion von Carbonaten eine Abgasbehandlungszusammensetzung zu erhalten, welche zwei unterschiedliche, d. h. voneinander verschiedene, Abgasbehandlungsreagenzien, vorzugsweise Natriumhydrogencarbonat und Calciumcarbonat, aufweist. Durch gezielte Einstellung des Überschusses an Calciumhalogenid, insbesondere Calciumchlorid, lässt sich besonders einfach und wenig aufwendig ein nahezu beliebiges Verhältnis der beiden Abgasbehandlungsreagenzien zueinander einstellen.

Im Rahmen der vorliegenden Erfindung hat es sich besonders bewährt, wenn das in Verfahrensschritt (c) gebildete Alkalihydrogencarbonat und/oder -carbonat, insbesondere Alkalihydrogencarbonat, vorzugsweise Natriumhydrogencarbonat, als insbesondere erstes Abgasbehandlungsreagenz (Abgasbehandlungsreagenz 1) in Verfahrensschritt (a) zurückgeführt wird, insbesondere nach Abtrennung, vorzugsweise Ausfällung, aus dem am Ende von Verfahrensschritt (c) resultierenden Reaktionsgemisch. Gleichfalls wird es bevorzugt, wenn das in Verfahrensschritt (c) gebildete Calciumcarbonat als insbesondere zweites Abgasbehandlungsreagenz (Abgasbehandlungsreagenz 2) in Verfahrensschritt (a) zurückgeführt wird, insbesondere nach Abtrennung, vorzugsweise nach Ausfällung, aus dem am Ende von Verfahrensschritt (c) resultierenden Reaktionsgemisch. Im Rahmen der vorliegenden Erfindung wird es dabei bevorzugt, wenn die beiden Abgasbehandlungsreagenzien gemeinsam isoliert und als Abgasbehandlungszusammensetzung weiterverwendet werden.

Der Verfahrensschritt (c) wird nachfolgend exemplarisch anhand der Reaktionen (4) und (5) erläutert, wobei als Alkalihalogenid Natriumchlorid eingesetzt wird. Natriumchlorid reagiert mit Kohlendioxid ($CO_2$) und Ammoniak ($NH_3$) im wässrigen Milieu zu Ammoniumhydrogencarbonat ($NaHCO_3$) und Ammoniumchlorid ($NH_4Cl$), während Calciumchlorid in analoger Weise zu Calciumcarbonat ($CaCO_3$) reagiert:

$$NaCl + CO_2 + NH_3 + H_2O \rightarrow NaHCO_3 + NH_4Cl \qquad (4)$$

$$CaCl_2 + CO_2 + 2\,NH_3 + H_2O \rightarrow CaCO_3 + 2\,NH_4Cl \qquad (5)$$

Gemäß einer bevorzugten Ausführungsform stammt das in Verfahrensschritt (c) eingesetzte Kohlendioxid aus den zu behandelnden Abgasen, insbesondere nach Aufkonzentrierung des Kohlendioxidgehalts in den zu behandelnden Abgasen, bevorzugt auf mindestens 50 Vol.-%, insbesondere mindestens 80 Vol.-%, bezogen auf die Abgase. Wenn das zur Bildung des Alkalihydrogencarbonats bzw. -carbonats und des Calciumcarbonats benötigte Kohlendioxid aus den Abgasen stammt, ist es nicht erforderlich, dieses zusätzlich zu erwerben, was Kosten spart. Zudem lässt sich so die Kohlendioxidbilanz des erfindungsgemäßen Verfahrens in Bezug auf die chemischen Reaktionen neutral gestalten, d. h. es wird im Zuge der ablaufenden Reaktion ebensoviel Kohlendioxid freigesetzt, wie bei der Bildung des Alkalihydrogencarbonats bzw. -carbonats und des Calciumcarbonats gebunden wird.

Alternativ kann das zur Herstellung des Alkalihydrogencarbonats bzw. -carbonats benötige Kohlendioxid jedoch auch aus einer externen Quelle eingespeist werden. In diesem Fall kann das Kohlendioxid beispielsweise aus Luftzerlegungs- bzw. Luftverflüssigungsprozessen stammen. Dabei kann das Kohlendioxid in Konzentrationen von über 90 Vol.-%, bezogen auf das verwendete Gasvolumen, eingesetzt werden.

Was die Temperaturen anbelangt, bei denen Verfahrensschritt (c) des erfindungsgemäßen Verfahrens durchgeführt wird, so können diese in weiten Bereichen variieren. Im allgemeinen wird Verfahrensschritt (c) bei Temperaturen von höchstens 60 °C durchgeführt werden. Insbesondere kann Verfahrensschritt (c) bei Temperaturen im Bereich von 10 bis 60 °C, insbesondere 20 bis 60 °C, durchgeführt werden. Dieser Temperaturbereich hat sich insbesondere dann als vorteilhaft erwiesen, wenn in Verfahrensschritt (c) ein Alkalihydrogencarbonat, insbesondere Natriumhydrogencarbonat, gebildet wird. Alkalihydrogencarbonate, insbesondere Natriumhydrogencarbonat, reagieren bei höheren Temperaturen zu den entsprechenden Alkalicarbonaten. Dennoch ist es anwendungsbezogen oder einzelfallbedingt nicht ausgeschlossen, von den vorgenannten Werten abzuweichen, ohne dass der Rahmen der vorliegenden Erfindung verlassen ist; dies zu entscheiden liegt im fachmännischen Können bzw. im Ermessen des auf diesem Gebiet tätigen Fachmanns.

In Bezug auf das erfindungsgemäße Verfahren kann in Verfahrensschritt (c) als weiteres Reaktionsprodukt ein Ammoniumhalogenid, insbesondere Ammoniumchlorid, gebildet werden. Dabei kann es vorgesehen sein, dass das in Verfahrensschritt (c) als weiteres Reaktionsprodukt gebildete Ammoniumhalogenid, insbesondere Ammoniumchlorid, in Form einer vorzugsweise wässrigen Lösung oder Dispersion vorliegt. Gemäß einer bevorzugten Ausführungsform der vorliegenden Erfindung wird das Ammoniumhalogenid, insbesondere Ammoniumchlorid, insbesondere dessen vorzugsweise wässrige Lösung oder Dispersion, in einem nachfolgenden Verfahrensschritt (d) zu Ammoniak und Calciumhalogenid, insbesondere Calciumchlorid, umgesetzt. Dabei kann es vorgesehen sein, dass das Ammoniumhalogenid, insbesondere Ammoniumchlorid, insbesondere dessen vorzugsweise wässrige Lösung oder Dispersion, unter Zusatz von bzw. Inkontaktbringen mit Calciumhydroxid zu Ammoniak und Calciumhalogenid, insbesondere Calciumchlorid, umgesetzt wird.

Weiterhin kann es erfindungsgemäß vorgesehen sein, dass der in Verfahrensschritt (d) erhaltene Ammoniak in Verfahrensschritt (c) zurückgeführt wird. Darüber hinaus kann es ebenfalls vorgesehen sein, dass das im Verfahrensschritt (d) erhaltene Calciumhalogenid, insbesondere Calciumchlorid, in den Verfahrensschritt (b) zurückgeführt wird.

Der Verfahrensschritt (d) wird nachfolgend durch die Reaktion (6) veranschaulicht, wobei als Ammoniumhalogenid Ammoniumchlorid eingesetzt wird. Ammoniumchlorid ($NH_4Cl$) reagiert mit Calciumhydroxid ($Ca(OH)_2$) zu Calciumchlorid ($CaCl_2$), Ammoniak ($NH_3$) und Wasser:

$$2\ NH_4Cl + Ca(OH)_2 \rightarrow CaCl_2 + 2\ NH_3 + 2\ H_2O \qquad (6)$$

Die Temperaturen, bei denen der optionale Verfahrensschritt (d) des erfindungsgemäßen Verfahrens durchgeführt wird, können im Rahmen der vorliegenden Erfindung in weiten Bereichen variieren. Im allgemeinen kann Verfahrensschritt (d) bei Temperaturen von 40 bis 150 °C, insbesondere 70 bis 100 °C, bevorzugt 100 bis 120 °C und erhöhtem Druck durchgeführt werden. In diesem Temperaturbereich lässt sich der Ammoniak besonders effektiv aus dem vorzugsweise wässrigen Medium entfernen. Dennoch ist es anwendungsbezogen oder einzelfallbedingt nicht ausgeschlossen, von den vorgenannten Werten abzuweichen, ohne dass der Rahmen der vorliegenden Erfindung verlassen ist; dies zu entscheiden liegt im fachmännischen Können bzw. im Ermessen des auf diesem Gebiet tätigen Fachmanns.

Es hat sich im Rahmen der vorliegenden Erfindung als besonders vorteilhaft erwiesen, wenn die zur Durchführung des Verfahrensschritts (d) benötigen Temperaturen zumindest teilweise durch die stark exotherme Hydratation von gebranntem Kalk (Calciumoxid, CaO) zu gelöschtem Kalk bzw. Kalkmilch (Calciumhydroxid, $Ca(OH)_2$) erzeugt werden. Auf diese Weise wird eine kostenintensive externe Beheizung vermieden bzw. drastisch verringert.

Gemäß einer besonderen Ausführungsform der vorliegenden Erfindung betrifft die vorliegende Erfindung ein erfindungsgemäßes Verfahren, insbesondere wie zuvor definiert, zur Behandlung von Schwefeloxide und Fluorwasserstoff enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide und des Fluorwasserstoffs oder zu Zwecken der Reduktion des Schwefeloxidgehalts und des Fluorwasserstoffgehalts, mit den folgenden Verfahrensschritten:

(a) Umsetzung der aus den zu behandelnden Abgasen stammenden Schwefeloxide und des Fluorwasserstoffs mit mindestens zwei unterschiedlichen Abgasbehandlungsreagenzien zur Behandlung der Abgase, insbesondere in Form eines ersten Abgasbehandlungsreagenzes (Abgasbehandlungsreagenz 1) und eines zweiten Abgasbehandlungsreagenzes (Abgasbehandlungsreagenz 2), unter oxidierenden Bedingungen und/oder in Gegenwart von Sauerstoff, wobei das erste Abgasbehandlungsreagenz (Abgasbehandlungsreagenz 1) ein Alkalihydrogencarbonat und/oder -carbonat ist und durch Reaktion mit den Schwefeloxiden zu Alkalisulfat umgesetzt wird und wobei das zweite Abgasbehandlungsreagenz (Abgasbehandlungsreagenz 2) ein Erdalkalisalz, insbesondere ein Calciumsalz, ist und durch Reaktion mit Fluorwasserstoff zu Erdalkalifluorid, insbesondere Calciumfluorid, umgesetzt wird, wobei die Abgasbehandlungsreagenzien zur Behandlung der Abgase gemeinsam in den Strom der Abgase eingebracht werden; dann

(b) Umsetzung des in Verfahrensschritt (a) erhaltenen Alkalisulfats mit einem Calciumhalogenid, vorzugsweise Calciumchlorid, zur Erzeugung von Calciumsulfat, vorzugsweise in Form von Gips, und Alkalihalogenid, insbesondere Alkalichlorid; nachfolgend

(c) Umsetzung des in Verfahrensschritt (b) erhaltenen Alkalihalogenids, insbesondere Alkalichlorids, zu Alkalihydrogencarbonat und/oder -carbonat, insbesondere Alkalihydrogencarbonat, vorzugsweise Natriumhydrogencarbonat, insbesondere unter Zusatz von und/oder in Kontaktbringen mit Kohlendioxid und Ammoniak und/oder insbesondere unter Bildung von Ammoniumhalogenid, insbesondere Ammoniumchlorid als weiterem Reaktionsprodukt, gegebenenfalls Umsetzung von nichtumgesetzten, insbesondere überschüssigem, Calciumhalogenid, insbesondere Calciumchlorid, zu Calciumcarbonat, insbesondere unter Zusatz von und/oder Inkontaktbringen mit Kohlendioxid und Ammoniak und/oder insbesondere unter Bildung von Ammoniumhalogenid, insbesondere Ammoniumchlorid, als weiterem Reaktionsprodukt, gegebenenfalls gefolgt von einer Rückführung des resultierenden Alkalihydrogencarbonats und/oder -carbonats und/oder Calciumcarbonats in Verfahrensschritt (a); dann

(d) gegebenenfalls Umsetzung des im Verfahrensschritt (c) erhaltenen Ammoniumhalogenids, insbesondere Ammoniumchlorids, zu Ammoniak und Calciumhalogenid, insbesondere Calciumchlorid, gegebenenfalls gefolgt von einer Rückführung des resultierenden Ammoniaks in Verfahrensschritt (c) und/oder gegebenenfalls gefolgt von einer Rückführung des resultierenden Calciumhalogenids in Verfahrensschritt (b).

Erfindungsgemäß können die zu behandelnden Abgase als Schwefeloxide Schwefeldioxid und/oder Schwefeltrioxid enthalten.

Es ist jedoch auch möglich, dass die zu behandelnden Abgase neben Schwefeloxiden und Fluorwasserstoff auch andere saure Gase, insbesondere weitere Halogenwasserstoffe, wie Chlorwasserstoff, enthalten. Dabei kann es vorgesehen sein, dass die sauren Gasen, insbesondere der weitere Halogenwasserstoff, vorzugsweise Chlorwasserstoff, in Verfahrensschritt (a) des erfindungsgemäßen Verfahrens mit dem Alkalihydrogencarbonat und/oder -carbonat, vorzugsweise dem Alkalihydrogencarbonat, umgesetzt werden.

Erfindungsgemäß können die sauren Gase, insbesondere der weitere Halogenwasserstoff, vorzugsweise Chlorwasserstoff, zu Alkalihalogenid, insbesondere Alkalichlorid, bevorzugt Natriumchlorid, umgesetzt werden. Dabei kann es vorgesehen sein, dass das Alkalihalogenid, insbesondere Alkalichlorid, bevorzugt Natriumchlorid, in Verfahrensschritt (c) eingesetzt wird. Dabei kann es auch vorgesehen sein, dass das Alkalihalogenid, insbesondere Alkalichlorid, bevorzugt Natriumchlorid, nach Durchlaufen von Verfahrensschritt (b) in Verfahrensschritt (c) eingesetzt wird.

Das Alkalihalogenid wird gemäß dieser Ausführungsform in Verfahrensschritt (a) gleichzeitig mit dem bei der Abscheidung von Schwefeloxiden und Fluorwasserstoff anfallenden Alkalisulfaten gebildet und mit diesen gemeinsam gesammelt und weiter verarbeitet. Das Alkalihalogenid kann dabei wie das Alkalisulfat gelöst bzw. dispergiert und von festen Verbrennungsrückständen und etwaigen Erdalkalifluoriden, insbesondere Calciumfluorid, getrennt werden. Bei der anschließenden Umsetzung mit einem Calciumhalogenid in Verfahrensschritt (b) reagiert zumindest im Wesentlichen nur das Alkalisulfat, wobei es insbesondere zu Alkalihalogenid umgesetzt wird. Das aus Verfahrensschritt (a) stammende Alkalihalogenid geht dabei unverändert aus Verfahrensschritt (b) hervor und wird erst in Verfahrensschritt (c) zusammen mit dem in Verfahrensschritt (b) aus dem Alkalisulfat hervorgegangenen Alkalihalogenid umgesetzt.

Im Allgemeinen entstehen insbesondere bei der Umsetzung der sauren Gase, insbesondere des weiteren Halogenwasserstoffs, vorzugsweise Chlorwasserstoffs, in Verfahrensschritt (a) mit dem Alkalihydrogencarbonat und/oder -carbonat, vorzugsweise dem Alkalihydrogencarbonat, Kohlendioxid und Wasser als weitere Reaktionsprodukte. Darüber hinaus reagiert Chlorwasserstoff auch mit Calciumcarbonat zu Calciumchlorid, wenngleich deutlich langsamer als Natriumhydrogencarbonat.

Die Umsetzung der sauren Gase mit Alkalihydrogencarbonat und/oder -carbonat im Verfahrensschritt (a) wird nachfolgend in der Reaktion (7) beispielhaft durch Umsetzung von Natriumhydrogencarbonat ($NaHCO_3$) mit Chlorwasserstoff (HCl) zu Natriumchlorid (NaCl), Kohlendioxid ($CO_2$) und Wasser veranschaulicht:

$$NaHCO_3 + HCl \rightarrow NaCl + CO_2 + H_2O \qquad (7)$$

Nach einer besonderen Ausführungsform der vorliegenden Erfindung wird das erfindungsgemäße Verfahren mit einem Entstickungsverfahren zu Zwecken der Entfernung und/oder Abscheidung der in den zu behandelnden Abgasen gleichermaßen vorhandenen Stickoxide oder zu Zwecken der Reduktion des Stickoxidgehalts gekoppelt und/oder kombiniert.

Dabei kann es vorgesehen sein, dass das Entstickungsverfahren stromaufwärts oder stromabwärts zu dem erfindungsgemäßen Verfahren durchgeführt wird. Stromaufwärts durchgeführte Entstickungsverfahren werden im Allgemeinen unter nichtkatalytischen Bedingungen bei hohen Temperaturen durchgeführt; insbesondere wird der Stickoxidgehalt durch Wahl geeigneter Verbrennungsbedingungen minimiert. Zudem können die Stickoxide durch Eindüsen von z. B. Ammoniak oder Harnstoff direkt in den Verbrennungsraum in einer Komproportionierung zu elementaren Stickstoff umgesetzt werden. Stromabwärts geschaltete Entstickungsverfahren gehen ebenfalls von einer Reduktion der Stickoxide durch Komproportionierung mit Ammoniak oder Harnstoff aus; aufgrund der wesentlich geringeren Temperaturen verlaufen diese Reaktionen jedoch vorrangig unter katalytischer Aktivierung.

Das erfindungsgemäße Verfahren erlaubt die Entfernung von sauren Bestandteilen aus Abgasen, insbesondere von Schwefeloxiden und Fluorwasserstoff, aus einer Vielzahl von technischen Prozessen. So ist es beispielsweise auch möglich, die bei der Glas-, Keramik- oder Baustoffherstellung anfallenden Abgase, welche üblicherweise mehr Fluorwasserstoff als Schwefeldioxid enthalten, einzusetzen. Gemäß einer besonderen Ausführungsform der vorliegenden Erfindung beträgt dabei das Verhältnis des ersten Abgasbehandlungsreagenzes (Abgasbehandlungsreagenz 1) zu dem zweiten Abgasbehandlugnsreagenz (Abgasbehandlungsreagenz 2), insbesondere von Natriumhydrogencarbonat zu Calciumcarbonat, 1 : 1 bis 1 : 10, insbesondere 1 : 2 bis 1 : 6, vorzugsweise 1 : 3 bis 1 : 5.

In diesem Zusammenhang hat es sich als vorteilhaft erwiesen, wenn die Menge des ersten Abgasbehandlungsreagenzes (Abgasbehandlungsreagenz 1), insbesondere Natriumhydrogencarbonat, in der Abgasbehandlungszusammensetzung im Bereich von 10 bis 50 Gew.-%, insbesondere 15 bis 35 Gew.-%, vorzugsweise 18 bis 25 Gew.-

%, bezogen auf das Gesamtgewicht der Abgasbehandlungsreagenzien, variiert wird.

Gleichfalls werden besonders gute Ergebnisse erhalten, wenn die Menge des zweiten Abgasbehandlungsreagenzes (Abgasbehandlungsreagenz 2), insbesondere Calciumcarbonat, in der Abgasbehandlungszusammensetzung im Bereich von 50 bis 90 Gew.-%, insbesondere 65 bis 87 Gew.-%, vorzugsweise 70 bis 85 Gew.-%, bezogen auf das Gesamtgewicht der Abgasbehandlungsreagenzien, variiert wird.

Gemäß dieser besonderen Ausführungsform kann es auch vorgesehen sein, dass die Abgasbehandlungszusammensetzung, insbesondere ein Gemisch des ersten und des zweiten Abgasbehandlungsreagenzes, zu Granulaten oder Pellets geformt oder verpresst werden, da bei der Ziegel-, Emaille- und Glasherstellung aufgrund der deutlich geringeren anfallenden Abgasmengen Schüttschichtfilter verwendet werden, d. h. die Abgase strömen durch ein Bett aus Granulat bzw. Pellets des Filtermaterials.

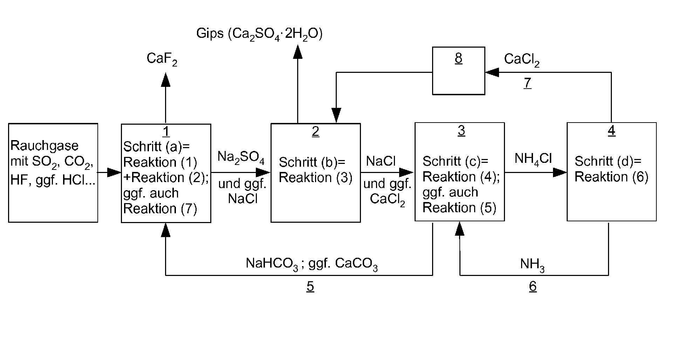

Die einzige Figurendarstellung zeigt schematisch - neben der schematischen Darstellung der nachfolgend beschriebenen erfindungsgemäßen Vorrichtung - einen schematisierten Ablauf des erfindungsgemäßen Verfahrens, wie er zuvor beschrieben wurde. Die Einzelheiten wurden bereits ausführlich dargelegt, so dass hier auf die diesbezüglichen Ausführungen verwiesen werden kann.

Weiterer Gegenstand der vorliegenden Erfindung - gemäß einem **zweiten** Aspekt der vorliegenden Erfindung - ist eine Vorrichtung nach Anspruch 11, wobei weitere, insbesondere vorteilhafte Ausgestaltungen Gegenstand der diesbezüglichen abhängigen Ansprüche sind.

Die erfindungsgemäße Vorrichtung ist, wie zuvor angeführt, in der einzigen Figurendarstellung zusammen mit einem erfindungsgemäßen Verfahrensablauf schematisch dargestellt.

Die einzige Figurendarstellung zeigt somit in schematischer Darstellung die erfindungsgemäße Vorrichtung zur Behandlung von Schwefeloxide und Fluorwasserstoff enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide und des Fluorwasserstoffs oder zu Zwecken der Reduktion des Schwefeloxidgehalts und des Fluorwasserstoffgehalts, insbesondere eine Vorrichtung zur Durchführung des zuvor beschriebenen erfindungsgemäßen Verfahrens,

wobei die Vorrichtung umfasst:

- einen Reaktor 1 zur Umsetzung der aus den zu behandelnden Abgasen stammenden Schwefeloxiden zu Alkalisulfat und des Fluorwasserstoffs zu Calciumfluorid;

- stromabwärts zu dem Reaktor 1 einen Reaktor 2 zur Umsetzung des in dem stromaufwärts zu Reaktor 2 angeordneten Reaktor 1 erhaltenen Alkalisulfats zu Calciumsulfat, vorzugsweise in Form von Gips, und Alkalihalogenid;

- stromabwärts zu dem Reaktor 2 einen Reaktor 3 zur Umsetzung des in dem stromaufwärts zu Reaktor 3 angeordneten Reaktor 2 erhaltenen Alkalihalogenids zu Alkalihydrogencarbonat und/oder -carbonat und Ammoniumhalogenid und gegebenenfalls zur Umsetzung von Calciumhalogenid zu Calciumcarbonat und Ammoniumhalogenid, wobei der Reaktor 3 eine Einrichtung 5 zur Rückführung des erhaltenen Alkalihydrogencarbonats und/oder -carbonats und des gegebenenfalls erhaltenen Calciumcarbonats zu dem Reaktor 1 umfasst;

- gegebenenfalls stromabwärts zu dem Reaktor 3 einen Reaktor 4 zur Umsetzung des in dem stromaufwärts zu Reaktor 4 angeordneten Reaktor 3 erhaltenen Ammoniumhalogenids zu Ammoniak und Calciumhalogenid, insbesondere wobei der Reaktor 4 gegebenenfalls eine Einrichtung 6 zur Rückführung des erhaltenen Ammoniaks in den Reaktor 3 und/oder eine Einrichtung 7 zur Rückführung des erhaltenen Calciumhalogenids in den Reaktor 2 umfasst.

Gemäß einer bevorzugten Ausführungsform der erfindungsgemäßen Vorrichtung ist der Reaktor 1 separat von den übrigen Reaktoren 2, 3 und gegebenenfalls 4 betreibbar.

Dabei kann es erfindungsgemäß insbesondere vorgesehen sein, dass der Reaktor 1 als von den übrigen Reaktoren 2, 3 und gegebenenfalls 4 entkoppelte und/oder hierzu dezentrale Anlage betreibbar ist. Die Umsetzung der zu behandelnden Abgase in Reaktor 1 mit einem Alkalihydrogencarbonat bzw. -carbonat kann somit räumlich von den anderen Teilen der Vorrichtung und den weiteren Verfahrensschritten getrennt sein.

Üblicherweise weist der Reaktor 3 der erfindungsgemäßen Vorrichtung Einrichtungen zum Einleiten von Kohlendioxid einerseits und Ammoniak (z. B. als Gas oder als Lösung) andererseits auf.

Darüber hinaus hat es sich im Rahmen der vorliegenden Erfindung als vorteilhaft erwiesen, wenn der Reaktor 1 Einrichtungen zur Entfernung des erhaltenen Calciumfluorids aufweist und/oder wenn zwischen Reaktor 1 und Reaktor 2 eine Einrichtung zur Entfernung des Calciumfluorids vorgesehen ist. Das Calciumfluorid ist äußerst unreaktiv und eine geeignete Möglichkeit hochtoxische Fluoridionen gefahrlos zu entsorgen. Es kann einfach bei der Lösung bzw. Suspendierung der weiteren Produkte aus der Reaktion der sauren Bestandteile der Abgase mit den Abgasbehandlungsreagenzien, insbesondere Natriumsulfat und Natriumchlorid, als Feststoff abgetrennt werden.

Im Rahmen der vorliegenden Erfindung werden besonders gute Ergebnisse erhalten, wenn die Einrichtung 7 zur Rückführung des Calciumhalogenids in den Reaktor 2 eine Einrichtung 8 zur Dosierung (Dosiereinrichtung) der Menge an Calciumhalogenid zugeordnet ist. Durch die Dosierung der Menge an Calciumhalogenid, insbesondere gegebenenfalls der Steuerung eines Überschusses an Calciumhalogenid bei der Umsetzung des Alkalisulfats zu Calciumsulfat und Alkalichlorid kann gezielt das Verhältnis der beiden Abgasbehandlungsreagenzien, welche in Reaktor 3 erhalten werden, eingestellt werden. Die Dosiereinrichtung 8 kann beispielsweise in Form eines Vorratsbehälters, welcher eine Suspension bzw. Lösung von Calciumhalogenid enthält, mit regelbarem Durchfluss ausgestaltet sein, mit welchem die Menge an Calciumhalogenid in Reaktor 2 eingestellt werden kann.

Für weitergehende Einzelheiten für die erfindungsgemäße Vorrichtung kann auf die obigen Ausführungen zu dem erfindungsgemäßen Verfahren verwiesen werden, welche in Bezug auf die erfindungsgemäße Vorrichtung entsprechend gelten.

Das erfindungsgemäße Verfahren, einschließlich der erfindungsgemäßen Vorrichtung zu seiner Durchführung, besitzt eine Reihe von Vorteilen, welche es gegenüber dem Stand der Technik auszeichnen:

Die gemeinsame Verwendung von zwei unterschiedlichen Abgasbehandlungsreagenzien, insbesondere von Natriumhydrogencarbonat und Calciumcarbonat, ermöglicht einerseits eine nahezu quantitative Abscheidung der Schwefeloxide aus den Abgasen und andererseits die Reduzierung des Fluorwasserstoffgehalts im Reingas, so dass die gesetzlichen Grenzwerte eingehalten werden. Es wird durch die Kombination der Abgasbehandlungsreagenzien ein jeweils nahezu quantitativer Umsatz der Abgasbehandlungsreagenzien erreicht, so dass nicht mit einem Überschuss an Abgasbehandlungsreagenzien gearbeitet werden muss, sondern definierte Produkte bei der Abgasbehandlung zurückbleiben, welche wiederum in einem einfachen Verfahren zu neuen Abgasbehandlungsreagenzien, insbesondere zu definierten Abgasbehandlungszusammensetzungen, welche insbesondere aus Natriumhydrogencarbonat und Calciumcarbonat bestehen, recycelt werden können. Als einziges echtes Abfallprodukt entsteht Calciumfluorid, welches jedoch auf der aufgrund der insgesamt immer noch geringen Gesamtmenge an Fluorwasserstoff in den Abgasen nur in geringen Mengen anfällt und darüber hinaus vollkommen ungiftig und nicht umweltproblematisch ist sowie kostengünstig entsorgt werden kann.

Das erfindungsgemäße Verfahren ist wesentlich ökonomischer und kostengünstiger als die bislang bekannten Verfahren des Standes der Technik. Es verbindet die Effizienz einer Trockensorption von Schwefeloxiden durch Alkalihydrogencarbonate bzw. -carbonate mit den Kostenvorteilen einer kalkbasierten Abscheidung. Zur Durchführung des Verfahrens müssen - sofern überhaupt - lediglich Brandkalk und gegebenenfalls Kohlendioxid, wenn dieses nicht aus den Rauchgasen gewonnen wird, und gegebenenfalls Calciumchlorid erworben werden. Die Abscheidungsrate der Schwefeloxide liegt im erfindungsgemäßen Verfahren bei nahezu 100 %, während kalkbasierte Trockenentschwefelungsverfahren oftmals nur Abscheideraten von etwa 10 % besitzen.

Das umweltgefährdende Ammoniak wird in einem Kreislaufprozess gefahren und gelangt so nicht in die Umwelt bzw. muss nicht kostenträchtig entsorgt werden. Die chloridhaltigen Verbindungen werden ebenfalls größtenteils im Kreislaufprozess gefahren und belasten somit ebenfalls nicht oder deutlich weniger das Abwasser bzw. die Umwelt.

Auch das zur Abscheidung von Schwefeloxiden benötigte Hydrogencarbonat bzw. -carbonat wird in einem Pseudokreisprozess verwendet. Es wird einerseits bei der Abscheidung bzw. Entfernung verbraucht, andererseits wird im Laufe des Verfahrens dieselbe Menge an Hydrogencarbonat bzw. -carbonat wiedergewonnen, so dass kein Nettoverbrauch dieser teuren Substanzen vorhanden ist. Als einziges "Abfallprodukt" entsteht Gips, welcher wiederum einen Rohstoff darstellt und als Baustoff verkauft bzw. bei der Zementherstellung genutzt werden kann.

Im gesamten Verfahren entstehen zumindest im Wesentlichen keine Abwässer, welche kostenträchtig aufbereitet bzw. entsorgt werden müssen.

Es werden keine gefährlichen und/oder schwierig zu handhabenden Substanzen erzeugt bzw. im erfindungsgemäßen Verfahren eingesetzt.

Weiterer Gegenstand der vorliegenden Erfindung gemäß einem **dritten** Aspekt der vorliegenden Erfindung ist eine Zusammensetzung, insbesondere Abgasbehandlungszusammensetzung, zur Behandlung von Schwefeloxide und Fluorwasserstoff enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide und Fluorwasserstoffs oder zu Zwecken der Reduktion des Schwefeloxidgehalts und des Fluorwasserstoffgehalts, umfassend

(a) ein erstes feinteiliges, insbesondere pulverförmiges, Abgasbehandlungsreagenz (Abgasbehandlungsreagenz 1) und

(b) ein zweites feinteiliges, insbesondere pulverförmiges, Abgasbehandlungsreagenz (Abgasbehandlungsreagenz 2).

Wie zuvor bereits ausgeführt, werden im Rahmen der vorliegenden Erfindung besonders gute Ergebnisse erhalten, wenn die Abgasbehandlungsreagenzien zur Behandlung der Abgase jeweils ein Carbonat und/oder ein Hydrogencarbonat aufweisen, insbesondere wobei das eine Abgasbehandlungsreagenz ein Hydrogencarbonat und das andere Abgasbehandlungsreagenz ein Carbonat ist.

Gleichfalls werden gute Ergebnisse erhalten, wenn das erste Abgasbehandlungsreagenz (Abgasbehandlungsreagenz 1) auf Basis einer Alkaliverbindung, insbesondere auf Basis eines Alkalisalzes ausgebildet ist und/oder wenn das zweite Abgasbehandlungsreagenz (Abgasbehandlungsreagenz 2) auf Basis einer Erdalkaliverbindung, insbesondere eines Erdalkalisalzes, ausgebildet ist.

Gemäß einer besonders bevorzugten Ausführungsform der vorliegenden Erfindung ist das erste Abgasbehandlungsreagenz (Abgasbehandlungsreagenz 1) zur Behandlung der Abgase ein Alkalicarbonat und/oder ein Alkalihydrogencarbonat, insbesondere Natriumcarbonat und/oder Natriumhydrogencarbonat, vorzugsweise Natriumhydrogencarbonat.

In diesem Zusammenhang hat es sich gleichfalls bewährt, wenn das zweite Abgasbehandlungsreagenz (Abgasbehandlungsreagenz 2) zur Behandlung der Abgase ein Calciumsalz, insbesondere Calciumhydroxid und/oder Calciumcarbonat, vorzugsweise Calciumcarbonat, ist.

Üblicherweise weist die Zusammensetzung die Abgasbehandlungsreagenzien zur Behandlung der Abgase in einem gewichtsbezogenen Verhältnis des ersten Abgasbehandlungsreagenzes (Abgasbehandlungsreagenz 1) zum zweiten Abgasbehandlungsreagenz (Abgasbehandlungsreagenz 2), insbesondere von Natriumhydrogencarbonat zu Calciumcarbonat, im Bereich von 7 : 1 bis 10.000 : 1, insbesondere 10 : 1 bis 5.000 : 1, vorzugsweise 15 : 1 bis 2.000 : 1, bevorzugt 20 : 1 bis 1.000 : 1, besonders bevorzugt 30 : 1 bis 500 : 1, auf.

Was nun die Menge des ersten Abgasbehandlungsreagenzes (Abgasbehandlungsreagenz 1) in der Zusammensetzung betrifft, so kann diese naturgemäß in weiten Bereichen variieren. Besonders gute Ergebnisse werden jedoch erhalten, wenn die Zusammensetzung das erste Abgasbehandlungsreagenz (Abgasbehandlungsreagenz 1) in Mengen von 80 bis 99,99 Gew.-%, insbesondere 85 bis 99,98 Gew.-%, vorzugsweise 90 bis 99,95 Gew.-%, bevorzugt 92 bis 99,93 Gew.-%, besonders bevorzugt 95 bis 99,9 Gew.-%, ganz besonders bevorzugt 97 bis 99,7 Gew.-%, bezogen auf die Zusammensetzung, enthält.

Gleichfalls hat es sich bewährt, wenn die Zusammensetzung das zweite Abgasbehandlungsreagenz (Abgasbehandlungsreagenz 2) in Mengen von 0,01 bis 20 Gew.-%, insbesondere 0,02 bis 15 Gew.-%, vorzugsweise 0,05 bis 10 Gew.-%, bevorzugt 0,07 bis 8 Gew.-%, besonders bevorzugt 0,1 bis 5 Gew.-%, ganz besonders bevorzugt 0,3 bis 3 Gew.-%, bezogen auf die Zusammensetzung, enthält.

Gemäß einer besonderen Ausführungsform der vorliegenden Erfindung weist die Zusammensetzung die Abgasbehandlungsreagenzien zur Behandlung der Abgase in einem Reinheitsgrad von 75 bis 100 Gew.-%, insbesondere 80 bis 99 Gew.-%, vorzugsweise 85 bis 98 Gew.-%, bevorzugt 90 bis 95 Gew.-%, bezogen auf das Gewicht der jeweiligen Abgasbehandlungsreagenzien, auf.

Für weitergehende Einzelheiten zu diesem Erfindungsaspekt kann auf die vorangehenden Ausführungen zu dem erfindungsgemäßen Verfahren und der erfindungsgemäßen Vorrichtung verwiesen werden, welche in Bezug auf die erfindungsgemäße Zusammensetzung entsprechend gelten.

Wiederum weiterer Gegenstand der vorliegenden Erfindung - gemäß einem **vierten** Aspekte der vorliegenden Erfindung - ist die Verwendung einer zuvor beschriebenen Zusammensetzung zur Behandlung von Schwefeloxiden und Fluorwasserstoff enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide und des Fluorwasserstoffs oder zu Zwecken der Reduktion des Schwefeloxidgehalts und des Fluorwasserstoffgehalts, insbesondere zur Durchführung eines zuvor beschriebenen Verfahrens.

Für weitere Einzelheiten zu diesem Erfindungsaspekt kann auf die Ausführungen zu den vorangegangenen Erfindungsaspekten verwiesen werden, welche in Bezug auf die erfindungsgemäße Verwendung entsprechend gelten.

Schließlich ist wiederum weiterer Gegenstand der vorliegenden Erfindung - gemäß einem **fünften** Aspekt der vorliegenden Erfindung - ein Verfahren zur Herstellung einer Zusammensetzung, insbesondere eine Abgasbehandlungszusammensetzung, insbesondere wie zuvor beschrieben, zur Behandlung von Schwefeloxide und Fluorwasserstoff enthaltenden Abgasen, aufweisend Alkalihydrogencarbonat und/oder -carbonat, insbesondere Alkalihydrogencarbonat, vorzugsweise Natriumhydrogencarbonat, als erstes Abgasbehandlungsreagenz und Calciumcarbonat als zweites Abgasbehandlungsreagenz, wobei die Zusammensetzung aus den Rückständen der Behandlung von Schwefeloxide enthaltenden Abgasen gewonnen wird, wobei

in einem ersten Verfahrensschritt ein Alkalisulfat, insbesondere Natriumsulfat, mit einem Überschuss, insbesondere einem molaren Überschuss, an Calciumhalogenid, vorzugsweise Calciumchlorid, zur Erzeugung von Calciumsulfat, vorzugsweise in Form von Gips, und Alkalihalogenid, insbesondere Alkalichlorid, bevorzugt Natriumchlorid, umgesetzt wird;

nachfolgend das erhaltene Alkalihalogenid, insbesondere Alkalichlorid, bevorzugt Natriumchlorid, zu Alkalihydrogencarbonat und/oder -carbonat, insbesondere Alkalihydrogencarbonat, vorzugsweise Alkalihydrogencarbonat, und das überschüssige Calciumhalogenid, insbesondere Calciumchlorid, zu Calciumcarbonat umgesetzt wird, insbesondere unter Zusatz von und/oder Inkontaktbringen mit Kohlendioxid und Ammoniak und/oder insbesondere unter Bildung von Ammoniumhalogenid, insbesondere Ammoniumchlorid, als weiterem Reaktionsprodukt;

dann Isolierung des gebildeten Alkalihydrogencarbonats und/oder -carbonats, insbesondere Alkalihydrogencarbonats, vorzugsweise Natriumhydrogencarbonats, und Calciumcarbonats als Zusammensetzung zur Behandlung von Schwefeloxide und Fluorwasserstoff enthaltenden Abgase isoliert wird; und

gegebenenfalls Umsetzung des zuvor enthaltenen Ammoniumhalogenids, insbesondere Ammoniumchlorids, zu Ammoniak und Calciumhalogenid, insbesondere Calciumchlorid.

Das erfindungsgemäße Verfahren erlaubt eine einfache und universelle Aufarbeitung von Rückständen, welche aus der Abgasbehandlung, insbesondere der Trockenwäsche, von Schwefeloxide enthaltenden Abgasen mit Alkalihydrogencarbonat, insbesondere Natriumhydrogencarbonat, erhalten werden. Insbesondere lässt sich aus diesen Rückständen durch ein einfaches Verfahren eine Zusammensetzung, insbesondere eine Abgasbehandlungszusammensetzung, erhalten, welche mindestens zwei unterschiedliche Abgasbehandlungsreagenzien aufweist.

Für weitergehende Einzelheiten zu diesem Erfindungsaspekt kann auf die Ausführungen zu den übrigen Erfindungsaspekten verwiesen werden, welche in Bezug auf das erfindungsgemäße Herstellungsverfahren entsprechend gelten.

Weitere Ausgestaltungen, Abwandlungen, Variationen sowie Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Im Folgenden wird der Gegenstand der vorliegenden Erfindung, insbesondere die Abgasbehandlung von Schwefeloxide und Fluorwasserstoff enthaltenden Abgasen aus technischen Prozessen eingehender beschrieben, wobei die nachfolgenden Ausführungsbeispiele den Gegenstand der vorliegenden Erfindung nur exemplarisch verdeutlichen und nicht beschränken.

**Ausführungsbeispiele:**

Die Effekte bzw. die Auswirkungen der Verwendung von Abgasbehandlungszusammensetzungen, welche Natriumhydrogencarbonat und Natriumcarbonat aufweisen, werden nachfolgend am Beispiel einer Müllverbrennungsanlage sowie einer Sondermüllverbrennungsanlage beschrieben. Die eingesetzte Abgasbehandlungszusammensetzung enthält 98 Gew.-% Natriumhydrogencarbonat und 2 Gew.-% Calciumcarbonat.

**1. Müllverbrennungsanlage**

Die Versuche werden an einer Müllverbrennungsanlage durchgeführt, in welcher ca. 10 t Müll pro Stunde verbrannt werden, wobei ein Abgasstrom (Rohgas) von ca. 60.000 Normkubikmetern (trocken) pro Stunde ($Nm^3$/h, tr) bei 10 Vol.-% Sauerstoff und 14 Vol.-% Feuchte erzeugt wird.

<div align="center">

**Rohgaswerte**

| | | |
|---|---|---|
| HCl | 1.200 mg/$Nm^3$, tr | = 72 kg HCl/h |
| $SO_2$ | 300 mg/$Nm^3$, tr | = 18 kg $SO_2$/h |
| HF | 20 mg/$Nm^3$, tr | = 1,2 kg HF/h |

</div>

**Abgasbehandlung mit Natriumhydrogencarbonat**

Es wird eine Trockenwäsche mit Natriumhydrogencarbonat durchgeführt, wobei ca. 240 kg Natriumhydrogencarbonat pro Stunde in den Abgasstrom eingedüst werden. Hierbei wurden folgende Reingaswerte erhalten.

<div align="center">

| | | |
|---|---|---|
| HCl | ca. 7 mg/$Nm^3$, tr | = 0,42 kg HCl/h |
| $SO_2$ | ca. 45 mg/$Nm^3$, tr | = 2,7 kg $SO_2$/h |
| HF | ca. 6 mg/$Nm^3$, tr | = 0,36 kg HF/h |

</div>

**Abgasbehandlung mit einer Abgasbehandlungszusammensetzung bestehend aus 98 Gew..-% Natriumhydrogencarbonat und 2 Gew.-% Calciumcarbonat**

Die zuvor beschriebene Abgasbehandlung wird mit der oben angegebenen Abgasbehandlungszusammensetzung wiederholt, wobei ca. 240 kg der Abgasbehandlungszusammensetzung pro Stunde in den Abgasstrom eingedüst werden. Hierbei werden folgende Reingaswerte erhalten:

$$HCl \quad ca.\ 7\ mg/Nm^3,\ tr \quad = 0,42\ kg\ HCl/h$$
$$SO_2 \quad ca.\ 45\ mg/Nm^3,\ tr \quad = 2,7\ kg\ SO_2/h$$
$$HF \quad ca.\ 2\ mg/Nm^3,\ tr \quad = 0,12\ kg\ HF/h$$

Es zeigt sich somit, dass durch die Verwendung eines Gemisches aus Natriumhydrogencarbonat und Calciumcarbonat die Menge Fluorwasserstoff im Reingas signifikant gesenkt werden kann, insbesondere unterhalb die gesetzlich vorgeschriebenen Grenzwerte und die Abscheideraten an Schwefeldioxid und Chlorwasserstoff gleichfalls hervorragend.

### 2. Sondermüllverbrennungsanlage

Es wurden Versuche an einer Sondermüllverbrennungsanlage durchgeführt, in welcher ca. 2 t Müll pro Stunde verbrannt werden, wobei ein Abgasstrom von ca. 12.000 $Nm^3$, tr bei 8 Vol.-% Sauerstoff und 14 Vol.-% Feuchte erzeugt wird.

**Rohgaswerte**

$$HCl \quad 3.000\ mg/Nm^3,\ tr \quad = 36\ kg\ HCl/h$$
$$SO_2 \quad 500\ mg/Nm^3,\ tr \quad = 6\ kg\ SO_2/h$$
$$HF \quad 800\ mg/Nm^3,\ tr \quad = 9,6\ kg\ HF/h$$

**Abgasbehandlung mit Natriumhydrogencarbonat**

Es wird eine Trockenwäsche mit Natriumhydrogencarbonat durchgeführt, wobei ca. 168 kg Natriumhydrogencarbonat pro Stunde in den Abgasstrom eingedüst werden. Es werden folgende Reingaswerte beobachtet:

$$HCl \quad ca.\ 7\ mg/Nm^3,\ tr \quad = 0,084\ kg\ HCl/h$$
$$SO_2 \quad ca.\ 40\ mg/Nm^3,\ tr \quad = 0,48\ kg\ SO_2/h$$
$$HF \quad ca.\ 80\ mg/Nm^3,\ tr \quad = 0,96\ kg\ HF/h$$

**Abgasbehandlung mit einer Abgaszusammensetzung bestehend aus 98 Gew.-% Natriumhydrogencarbonat und 2 Gew.-% Calciumcarbonat**

Die zuvor beschriebene Abgasbehandlung wird mit einer Mischung aus Natriumhyrogencarbonat und Calciumcarbonat wiederholt, wobei 168 kg der oben beschriebenen Abgasbehandlungszusammensetzung pro Stunde in den Abgasstrom eingedüst werden. Hierbei werden folgende Reingaswerte erhalten:

$$HCl \quad ca.\ 7\ mg/Nm^3,\ tr \quad = 0,084\ kg\ HCl/h$$
$$SO_2 \quad ca.\ 40\ mg/Nm^3,\ tr \quad = 0,48\ kg\ SO_2/h$$
$$HF \quad ca.\ 2\ mg/Nm^3,\ tr \quad = 0,012\ kg\ HF/h$$

Es zeigt sich, dass mit dem erfindungsgemäßen Verfahren die HF-Werte im Reingas in einfacher Weise unterhalb die gesetzlich erlaubten Höchstwerte gesenkt werden können, wobei die bestehenden Abgasbehandlungseinrichtungen zur Eindüsung von festem Natriumhydrogencarbonat ohne Modifizierung verwendet werden können. Darüber hinaus werden jeweils Produktemischungen im Zuge der Abgasbehandlung erhalten, welche eine Wiederaufbereitung bzw. eine Rezyklierung der Abgasbehandlungsreagenzien erlauben.

**Patentansprüche**

1. Verfahren zur Behandlung von saure Bestandteile, insbesondere Schwefeloxide und Fluorwasserstoff, enthaltenden Abgasen, insbesondere Abgasen aus technischen Verbrennungsanlagen, insbesondere Rauchgasen, oder aus technischen Prozessen, zu Zwecken der Entfernung und/oder Abscheidung der sauren Bestandteile der Abgase oder zu Zwecken der Reduktion des Gehalts an sauren Bestandteilen,
**dadurch gekennzeichnet,**
**dass** mindestens zwei unterschiedliche Abgasbehandlungsreagenzien zur Behandlung der Abgase in Form eines ersten Abgasbehandlungsreagenzes (Abgasbehandlungsreagenz 1) und eines zweiten Abgasbehandlungsreagenzes (Abgasbehandlungsreagenz 2) gemeinsam in den Strom der Abgase eingebracht werden und/oder mit dem Strom der Abgase in Kontakt gebracht werden.

2. Verfahren nach Anspruch 1, **dadurch gekennzeichnet,**
**dass** die Behandlung der Abgase durch chemische Umsetzung der sauren Bestandteile der Abgase erfolgt und/oder
**dass** die Umsetzung unter oxidierenden Bedingungen und/oder in Gegenwart von Sauerstoff erfolgt und/oder
**dass** die Abgasbehandlungsreagenzien zur Behandlung der Abgase als Feststoffe und/oder als Feststoffgemisch, insbesondere in Form von Pulvern, eingesetzt werden und/oder
**dass** die Abgasbehandlungsreagenzien zur Behandlung der Abgase als Abgasbehandlungszusammensetzung bereitgestellt werden und/oder die Abgasbehandlungsreagenzien zur Behandlung der Abgase vor Einbringung in den Abgasstrom gemischt werden und/oder
**dass** die Abgasbehandlungsreagenzien zur Behandlung der Abgase in feiner Verteilung mit den Abgasen in Kontakt gebracht werden, insbesondere in den Strom der Abgase eingedüst und/oder eingesprüht werden, und/oder
**dass** die die sauren Bestandteile enthaltenden Abgase im noch heißen Zustand, insbesondere bei Temperaturen im Bereich von 50 bis 1.000 °C, vorzugsweise 100 bis 300 °C, mit den Abgasbehandlungsreagenzien in Kontakt gebracht werden.

3. Verfahren nach Anspruch 1 oder 2, **dadurch gekennzeichnet,**
**dass** mindestens eines der Abgasbehandlungsreagenzien basisch ist, insbesondere mindestens zwei Abgasbehandlungsreagenzien, vorzugsweise alle Abgasbehandlungsreagenzien, basisch sind, und/oder
**dass** als Abgasbehandlungsreagenzien zur Behandlung der Abgase mindestens zwei unterschiedliche Carbonate und/oder Hydrogencarbonate, insbesondere mindestens ein Carbonat und mindestens ein Hydrogencarbonat, eingesetzt werden und/oder
**dass** mindestens eines der Abgasbehandlungsreagenzien, insbesondere das erste Abgasbehandlungsreagenz, zur Behandlung der Abgase auf Basis einer Alkaliverbindung, insbesondere auf Basis eines Alkalisalzes, ausgebildet ist, und/oder mindestens eines der Abgasbehandlungsreagenzien, insbesondere das zweite Abgasbehandlungsreagenz, zur Behandlung der Abgase auf Basis einer Erdalkaliverbindung, insbesondere eines Erdalkalisalzes, ausgebildet ist, insbesondere wobei mindestens eines der Abgasbehandlungsreagenzien, insbesondere das erste Abgasbehandlungsreagenz, zur Behandlung der Abgase ein Alkalihydrogencarbonat und/oder ein Alkalicarbonat, insbesondere Natriumhydrogencarbonat und/oder Natriumcarbonat, vorzugsweise Natriumhydrogencarbonat, ist und/oder insbesondere wobei mindestens eines der Abgasbehandlungsreagenzien, insbesondere das zweite Abgasbehandlungsreagenz, zur Behandlung der Abgase ein Calciumsalz, insbesondere Calciumhydroxid und/oder Calciumcarbonat, vorzugsweise Calciumcarbonat, ist.

4. Verfahren nach einem der vorangehenden Ansprüche, **dadurch gekennzeichnet,**
**dass** die Abgasbehandlungsreagenzien zur Behandlung der Abgase in einem gewichtsbezogenen Verhältnis des ersten Abgasbehandlungsreagenzes (Abgasbehandlungsreagenz 1) zum zweiten Abgasbehandlungsreagenz (Abgasbehandlungsreagenz 2), insbesondere von Natriumhydrogencarbonat zu Calciumcarbonat, im Bereich von 7 : 1 bis 10.000 : 1, insbesondere 10 : 1 bis 5.000 : 1, vorzugsweise 15 : 1 bis 2.000 : 1, bevorzugt 20 : 1 bis 1.000 : 1, besonders bevorzugt 30 : 1 bis 500 : 1, eingesetzt werden und/oder
**dass** die Menge des ersten Abgasbehandlungsreagenzes (Abgasbehandlungsreagenz 1) im Bereich von 80 bis 99,99 Gew.-%, insbesondere 85 bis 99,98 Gew.-%, vorzugsweise 90 bis 99,95 Gew.-%, bevorzugt 92 bis 99,93 Gew.-%, besonders bevorzugt 95 bis 99,9 Gew.-%, ganz besonders bevorzugt 97 bis 99,7 Gew.-%, bezogen auf das Gesamtgewicht der Abgasbehandlungsreagenzien, variiert wird und/oder
**dass** die Menge des zweiten Abgasbehandlungsreagenzes (Abgasbehandlungsreagenz 2) im Bereich von 0,01 bis 20 Gew.-%, insbesondere 0,02 bis 15 Gew.-%, vorzugsweise 0,05 bis 10 Gew.-%, bevorzugt 0,07 bis 8 Gew.-%, besonders bevorzugt 0,1 bis 5 Gew.-%, ganz besonders bevorzugt 0,3 bis 3 Gew.-%, bezogen auf das Gesamtgewicht der Abgasbehandlungsreagenzien, variiert wird und/oder
**dass** die Abgasbehandlungsreagenzien zur Behandlung der Abgase einen Reinheitsgrad im Bereich 75 bis 100 Gew.-%, insbesondere 80 bis 99 Gew.-%, vorzugsweise 85 bis 98 Gew.-%, bevorzugt 90 bis 95 Gew.-%, bezogen auf das Gewicht der jeweiligen Abgasbehandlungsreagenzien, aufweisen.

5. Verfahren zur Behandlung von Schwefeloxide und Fluorwasserstoff enthaltenden Abgasen insbesondere Abgasen aus technischen Verbrennungsanlagen, insbesondere Rauchgasen, oder aus technischen Prozessen, zu Zwecken der Entfernung und/oder Abscheidung von Schwefeloxiden und Fluorwasserstoff oder zu Zwecken der Reduktion des Gehalts an Schwefeloxiden und Fluorwasserstoff, insbesondere nach einem der vorangehenden Ansprüche, **dadurch gekennzeichnet,**
**dass** in einem ersten Verfahrensschritt (a) mindestens zwei unterschiedliche Abgasbehandlungsreagenzien zur Behandlung der Abgase in Form eines ersten Abgasbehandlungsreagenzes (Abgasbehandlungsreagenz 1) und eines zweiten Abgasbehandlungsreagenzes (Abgasbehandlungsreagenz 2) gemeinsam in den Strom der Abgase eingebracht und chemisch unter oxidierenden Bedingungen und/oder in Gegenwart von Sauerstoff mit den Schwefeloxiden und Fluorwasserstoff umgesetzt werden, wobei das erste Abgasbehandlungsreagenz (Abgasbehandlungsreagenz 1) ein Alkalihydrogencarbonat und/oder -carbonat ist und durch Reaktion mit den Schwefeloxiden zu Alkalisulfat umgesetzt wird und wobei das zweite Abgasbehandlungsreagenz (Abgasbehandlungsreagenz 2) ein Erdalkalisalz, insbesondere ein Calciumsalz, ist und durch Reaktion mit Fluorwasserstoff zu Erdalkalifluorid, insbesondere Calciumfluorid, umgesetzt wird.

6. Verfahren nach Anspruch 5, **dadurch gekennzeichnet,**
**dass** das in Verfahrensschritt (a) erhaltene Erdalkalifluorid, insbesondere Calciumfluorid, aus dem Verfahren ausgeschleust wird und/oder dass als Calciumsalz Calciumhydroxid und/oder Calciumcarbonat, insbesondere Calciumcarbonat, eingesetzt wird.

7. Verfahren nach Anspruch 5 oder 6, **dadurch gekennzeichnet,**
**dass** nachfolgend in einem zweiten Verfahrensschritt (b) das erhaltene Alkalisulfat mit mindestens einem Calciumhalogenid, vorzugsweise Calciumchlorid, zu Calciumsulfat, vorzugsweise in Form von Gips, und Alkalihalogenid, insbesondere Alkalichlorid, umgesetzt wird und/oder
**dass** als Alkalihydrogencarbonat und/oder -carbonat, vorzugsweise Alkalihydrogencarbonat, Natriumhydrogencarbonat und/oder -carbonat, vorzugsweise Natriumhydrogencarbonat, eingesetzt wird und/oder, dass in Verfahrensschritt (a) als Alkalisulfat Natriumsulfat erhalten wird und/oder, dass in Verfahrensschritt (b) als Alkalihalogenid, insbesondere Alkalichlorid, ein Natriumhalogenid, insbesondere Natriumchlorid, erhalten wird und/oder
**dass** Verfahrensschritt (a) derart durchgeführt wird, dass die Abgase im noch heißen Zustand, insbesondere bei Temperaturen im Bereich von 50 bis 1.000 °C, vorzugsweise 100 bis 300 °C, mit den Abgasbehandlungsreagenzien in Kontakt gebracht werden, und/oder
**dass** das in Verfahrensschritt (b) erhaltene Alkalihalogenid, insbesondere Alkalichlorid, in einem nachfolgenden Verfahrensschritt (c) zu Alkalihydrogencarbonat und/oder -carbonat, insbesondere Alkalihydrogencarbonat, vorzugsweise Natriumhydrogencarbonat, umgesetzt wird, insbesondere unter Zusatz von und/oder Inkontaktbringen mit Kohlendioxid und Ammoniak, insbesondere wobei das Alkalihalogenid, insbesondere Alkalichlorid, in Form einer vorzugsweise wässrigen Lösung oder Dispersion eingesetzt wird und/oder insbesondere wobei das Kohlendioxid und/oder der Ammoniak in gasförmiger Form eingesetzt wird/werden.

8. Verfahren nach Anspruch 7, **dadurch gekennzeichnet,**
**dass** in Verfahrensschritt (b) nicht umgesetztes, insbesondere überschüssiges, Calciumhalogenid, insbesondere Calciumchlorid, in Verfahrensschritt (c) zu Calciumcarbonat umgesetzt wird und/oder
**dass** das in Verfahrensschritt (c) gebildete Alkalihydrogencarbonat und/oder -carbonat, insbesondere Alkalihydrogencarbonat, vorzugsweise Natriumhydrogencarbonat, als insbesondere erstes Abgasbehandlungsreagenz (Abgasbehandlungsreagenz 1) in Verfahrensschritt (a) zurückgeführt wird, insbesondere nach Abtrennung, vorzugsweise Ausfällung, aus dem in Verfahrensschritt (c) resultierenden Reaktionsgemisch, und/oder dass das in Verfahrensschritt (c) gebildete Calciumcarbonat, als insbesondere zweites Abgasbehandlungsreagenz (Abgasbehandlungsreagenz 2) in Verfahrensschritt (a) zurückgeführt wird, insbesondere nach Abtrennung, vorzugsweise Ausfällung, aus dem in Verfahrensschritt (c) resultierenden Reaktionsgemisch.

9. Verfahren nach Anspruch 7 oder 8, **dadurch gekennzeichnet,**
**dass** in Verfahrensschritt (c) als weiteres Reaktionsprodukt ein Ammoniumhalogenid, insbesondere Ammoniumchlorid, gebildet wird, insbesondere in Form einer vorzugsweise wässrigen Lösung oder Dispersion, und/oder
**dass** das Ammoniumhalogenid, insbesondere Ammoniumchlorid, insbesondere dessen vorzugsweise wässrige Lösung oder Dispersion, in einem nachfolgenden Verfahrensschritt (d) zu Ammoniak und Calciumhalogenid, insbesondere Calciumchlorid, umgesetzt wird, insbesondere unter Zusatz von und/oder Inkontaktbringen mit Calciumhydroxid, insbesondere wobei der in Verfahrensschritt (d) erhaltene Ammoniak in den Verfahrensschritt (c) zurückgeführt wird und/oder insbesondere wobei das in Verfahrensschritt (d) erhaltene Calciumhalogenid, insbesondere Calciumchlorid, in Verfahrensschritt (b) zurückgeführt wird, insbesondere wobei Verfahrensschritt (d) bei Temperaturen von 40 bis 150 °C, insbesondere 70 bis 130 °C, bevorzugt 100 bis 120 °C, durchgeführt wird, insbesondere unter erhöhtem Druck.

10. Verfahren zur Behandlung von Schwefeloxide und Fluorwasserstoff enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide und des Fluorwasserstoffs oder zu Zwecken der Reduktion des Schwefeloxidgehalts und des Fluorwasserstoffgehalts, insbesondere nach einem der vorangehenden Ansprüche, **gekennzeichnet durch** die folgenden Verfahrensschritte:

(a) Umsetzung der aus den zu behandelnden Abgasen stammenden Schwefeloxide und des Fluorwasserstoffs mit mindestens zwei unterschiedlichen Abgasbehandlungsreagenzien zur Behandlung der Abgase, insbesondere in Form eines ersten Abgasbehandlungsreagenzes (Abgasbehandlungsreagenz 1) und eines zweiten Abgasbehandlungsreagenzes (Abgasbehandlungsreagenz 2), unter oxidierenden Bedingungen und/oder in Gegenwart von Sauerstoff, wobei das erste Abgasbehandlungsreagenz (Abgasbehandlungsreagenz 1) ein Alkalihydrogencarbonat und/oder -carbonat ist und **durch** Reaktion mit den Schwefeloxiden zu Alkalisulfat umgesetzt wird und wobei das zweite Abgasbehandlungsreagenz (Abgasbehandlungsreagenz 2) ein Erdalkalisalz, insbesondere ein Calciumsalz, ist und **durch** Reaktion mit Fluorwasserstoff zu Erdalkalifluorid, insbesondere Calciumfluorid, umgesetzt wird, wobei die Abgasbehandlungsreagenzien zur Behandlung der Abgase gemeinsam in den Strom der Abgase eingebracht werden; dann
(b) Umsetzung des in Verfahrensschritt (a) erhaltenen Alkalisulfats mit einem Calciumhalogenid, vorzugsweise Calciumchlorid, zur Erzeugung von Calciumsulfat, vorzugsweise in Form von Gips, und Alkalihalogenid, insbesondere Alkalichlorid; nachfolgend
(c) Umsetzung des in Verfahrensschritt (b) erhaltenen Alkalihalogenids, insbesondere Alkalichlorids, zu Alkalihydrogencarbonat und/oder -carbonat, insbesondere Alkalihydrogencarbonat, vorzugsweise Natriumhydrogencarbonat, insbesondere unter Zusatz von und/oder in Kontaktbringen mit Kohlendioxid und Ammoniak und/oder insbesondere unter Bildung von Ammoniumhalogenid, insbesondere Ammoniumchlorid, als weiterem Reaktionsprodukt, gegebenenfalls Umsetzung von nichtumgesetzten, insbesondere überschüssigem, Calciumhalogenid, insbesondere Calciumchlorid, zu Calciumcarbonat, insbesondere unter Zusatz von und/oder Inkontaktbringen mit Kohlendioxid und Ammoniak und/oder insbesondere unter Bildung von Ammoniumhalogenid, insbesondere Ammoniumchlorid, als weiterem Reaktionsprodukt, gegebenenfalls gefolgt von einer Rückführung des resultierenden Alkalihydrogencarbonats und/oder -carbonats und/oder Calciumcarbonats in Verfahrensschritt (a); dann
(d) gegebenenfalls Umsetzung des in Verfahrensschritt (c) erhaltenen Ammoniumhalogenids, insbesondere Ammoniumchlorids, zu Ammoniak und Calciumhalogenid, insbesondere Calciumchlorid, gegebenenfalls gefolgt von einer Rückführung des resultierenden Ammoniaks in Verfahrensschritt (c) und/oder gegebenenfalls gefolgt von einer Rückführung des resultierenden Calciumhalogenids in Verfahrensschritt (b).

11. Vorrichtung zur Behandlung von Schwefeloxide und Fluorwasserstoff enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide und des Fluorwasserstoffs oder zu Zwecken der Reduktion des Schwefeloxidgehalts und des Fluorwasserstoffgehalts, insbesondere Vorrichtung zur Durchführung eines Verfahrens nach einem der vorangehenden Ansprüche,
**dadurch gekennzeichnet,**
**dass** die Vorrichtung umfasst:

- einen Reaktor (1) zur Umsetzung der aus den zu behandelnden Abgasen stammenden Schwefeloxiden zu Alkalisulfat und des Fluorwasserstoffs zu Calciumfluorid;
- stromabwärts zu dem Reaktor (1) einen Reaktor (2) zur Umsetzung des in dem stromaufwärts zu Reaktor (2) angeordneten Reaktor (1) erhaltenen Alkalisulfats zu Calciumsulfat, vorzugsweise in Form von Gips, und Alkalihalogenid;
- stromabwärts zu dem Reaktor (2) einen Reaktor (3) zur Umsetzung des in dem stromaufwärts zu Reaktor (3) angeordneten Reaktor (2) erhaltenen Alkalihalogenids zu Alkalihydrogencarbonat und/oder -carbonat und Ammoniumhalogenid und gegebenenfalls zur Umsetzung von Calciumhalogenid zu Calciumcarbonat und Ammoniumhalogenid, wobei der Reaktor (3) eine Einrichtung (5) zur Rückführung des erhaltenen Alkalihydrogencarbonats und/oder -carbonats und des gegebenenfalls erhaltenen Calciumcarbonats zu dem Reaktor (1) umfasst;

- gegebenenfalls stromabwärts zu dem Reaktor (3) einen Reaktor (4) zur Umsetzung des in dem stromaufwärts zu Reaktor (4) angeordneten Reaktor (3) erhaltenen Ammoniumhalogenids zu Ammoniak und Calciumhalogenid, insbesondere wobei der Reaktor (4) gegebenenfalls eine Einrichtung (6) zur Rückführung des erhaltenen Ammoniaks in den Reaktor (3) und/oder eine Einrichtung (7) zur Rückführung des erhaltenen Calciumhalogenids in den Reaktor (2) umfasst.

12. Zusammensetzung, insbesondere Abgasbehandlungszusammensetzung, zur Behandlung von Schwefeloxide und Fluorwasserstoff enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide und des Fluorwasserstoffs oder zu Zwecken der Reduktion des Schwefeloxidgehalts und des Fluorwasserstoffgehalts, umfassend

    (a) ein erstes feinteiliges, insbesondere pulverförmiges, Abgasbehandlungsreagenz (Abgasbehandlungsreagenz 1) und
    (b) ein zweites feinteiliges, insbesondere pulverförmiges, Abgasbehandlungsreagenz (Abgasbehandlungsreagenz 2).

13. Zusammensetzung nach Anspruch 12, **dadurch gekennzeichnet,**
    **dass** die Abgasbehandlungsreagenzien zur Behandlung der Abgase jeweils ein Carbonat und/oder ein Hydrogencarbonat aufweisen, insbesondere wobei eines der Abgasbehandlungsreagenzien ein Hydrogencarbonat und das andere Abgasbehandlungsreagenz ein Carbonat ist, und/oder
    **dass** das erste Abgasbehandlungsreagenz (Abgasbehandlungsreagenz 1) auf Basis einer Alkaliverbindung, insbesondere auf Basis eines Alkalisalzes ausgebildet ist, und/oder dass das zweite Abgasbehandlungsreagenz (Abgasbehandlungsreagenz 2) auf Basis einer Erdalkaliverbindung, insbesondere eines Erdalkalisalzes, ausgebildet ist und/oder
    **dass** das erste Abgasbehandlungsreagenz (Abgasbehandlungsreagenz 1) ein Alkalicarbonat und/oder ein Alkalihydrogencarbonat, insbesondere Natriumcarbonat und/oder Natriumhydrogencarbonat, vorzugsweise Natriumhydrogencarbonat, ist und/oder
    **dass** das zweite Abgasbehandlungsreagenz (Abgasbehandlungsreagenz 2) ein Calciumsalz, insbesondere Calciumhydroxid und/oder Calciumcarbonat, vorzugsweise Calciumcarbonat, ist und/oder
    **dass** die Zusammensetzung die Abgasbehandlungsreagenzien zur Behandlung der Abgase in einem gewichtsbezogenen Verhältnis des ersten Abgasbehandlungsreagenzes (Abgasbehandlungsreagenz 1) zum zweiten Abgasbehandlungsreagenz (Abgasbehandlungsreagenz 2), insbesondere von Natriumhydrogencarbonat zu Calciumcarbonat, im Bereich von 7:1 bis 10.000 : 1, insbesondere 10 : 1 bis 5.000 : 1, vorzugsweise 15 : 1 bis 2.000 : 1, bevorzugt 20 : 1 bis 1.000 : 1, besonders bevorzugt 30 : 1 bis 500 : 1, aufweist und/oder
    **dass** die Zusammensetzung das erste Abgasbehandlungsreagenz (Abgasbehandlungsreagenz 1) in Mengen von 80 bis 99,99 Gew.-%, insbesondere 85 bis 99,98 Gew.-%, vorzugsweise 90 bis 99,95 Gew.-%, bevorzugt 92 bis 99,93 Gew.-%, besonders bevorzugt 95 bis 99,9 Gew.-%, ganz besonders bevorzugt 97 bis 99,7 Gew.-%, bezogen auf die Zusammensetzung, enthält und/oder
    **dass** die Zusammensetzung das zweite Abgasbehandlungsreagenz (Abgasbehandlungsreagenz 2) in Mengen von 0,01 bis 20 Gew.-%, insbesondere 0,02 bis 15 Gew.-%, vorzugsweise 0,05 bis 10 Gew.-%, bevorzugt 0,07 bis 8 Gew.-%, besonders bevorzugt 0,1 bis 5 Gew.-%. ganz besonders bevorzugt 0,3 bis 3 Gew.-%, bezogen auf die Zusammensetzung, enthält und/oder
    **dass** die Zusammensetzung die Abgasbehandlungsreagenzien zur Behandlung der Abgase in einem Reinheitsgrad von 75 bis 100 Gew.-%, insbesondere 80 bis 99 Gew.-%, vorzugsweise 85 bis 98 Gew.-%, bevorzugt 90 bis 95 Gew.-%, bezogen auf das Gewicht der jeweiligen Abgasbehandlungsreagenzien, aufweist.

14. Verwendung einer Zusammensetzung nach einem der Ansprüche 12 oder 13 zur Behandlung von Schwefeloxide und Fluorwasserstoff enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide und des Fluorwasserstoffs oder zu Zwecken der Reduktion des Schwefeloxidgehalts und des Fluorwasserstoffgehalts, insbesondere zur Durchführung eines Verfahrens nach einem der Ansprüche 1 bis 10.

15. Verfahren zur Herstellung einer Zusammensetzung, insbesondere nach einem der Ansprüche 12 oder 13, zur Behandlung von Schwefeloxide und Fluorwasserstoff enthaltenden Abgasen, aufweisend Alkalihydrogencarbonat und/oder -carbonat, insbesondere Alkalihydrogencarbonat, vorzugsweise Natriumhydrogencarbonat, als erstes Abgasbehandlungsreagenz und Calciumcarbonat als zweites Abgasbehandlungsreagenz, **dadurch gekennzeichnet,** **dass** die Zusammensetzung aus den Rückständen der Behandlung von Schwefeloxide enthaltenden Abgasen gewonnen wird, wobei

in einem ersten Verfahrensschritt ein Alkalisulfat, insbesondere Natriumsulfat, mit einem Überschuss, insbesondere einem molaren Überschuss, an Calciumhalogenid, vorzugsweise Calciumchlorid, zur Erzeugung von Calciumsulfat, vorzugsweise in Form von Gips, und Alkalihalogenid, insbesondere Alkalichlorid, bevorzugt Natriumchlorid, umgesetzt wird;

nachfolgend das erhaltenen Alkalihalogenid, insbesondere Alkalichlorid, bevorzugt Natriumchlorid, zu Alkalihydrogencarbonat und/oder -carbonat, insbesondere Alkalihydrogencarbonat, vorzugsweise Natriumhydrogencarbonat, und das überschüssige Calciumhalogenid, insbesondere Calciumchlorid, zu Calciumcarbonat umgesetzt wird, insbesondere unter Zusatz von und/oder Inkontaktbringen mit Kohlendioxid und Ammoniak und/oder insbesondere unter Bildung von Ammoniumhalogenid, insbesondere Ammoniumchlorid, als weiterem Reaktionsprodukt;

dann Isolierung des gebildeten Alkalihydrogencarbonats und/oder -carbonats, insbesondere Alkalihydrogencarbonats, vorzugsweise Natriumhydrogencarbonats, und Calciumcarbonats als Zusammensetzung zur Behandlung von Schwefeloxide und Fluorwasserstoff enthaltenden Abgase; und

gegebenenfalls Umsetzung des zuvor erhaltenen Ammoniumhalogenids, insbesondere Ammoniumchlorids, zu Ammoniak und Calciumhalogenid, insbesondere Calciumchlorid.

Gips $(Ca_2SO_4 \cdot 2H_2O)$

$CaF_2$

| | 8 | $CaCl_2$ |
| | | 7 |

| Rauchgase mit $SO_2$, $CO_2$, HF, ggf. HCl... | 1<br>Schritt (a)=<br>Reaktion (1)<br>+Reaktion (2);<br>ggf. auch<br>Reaktion (7) | $Na_2SO_4$<br>und ggf.<br>NaCl | 2<br>Schritt (b)=<br>Reaktion (3) | NaCl<br>und ggf.<br>$CaCl_2$ | 3<br>Schritt (c)=<br>Reaktion (4);<br>ggf. auch<br>Reaktion (5) | $NH_4Cl$ | 4<br>Schritt (d)=<br>Reaktion (6) |

$NaHCO_3$; ggf. $CaCO_3$

5

$NH_3$

6

Europäisches
Patentamt

European
Patent Office

Office européen
des brevets

## EUROPÄISCHER RECHERCHENBERICHT

**Nummer der Anmeldung**

EP 15 18 5262

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | WO 89/11329 A1 (FICHTEL ROLAND [DE])<br>30. November 1989 (1989-11-30)<br>* Seite 1, Absatz 2; Ansprüche 1, 7-9, 15-17, 19, 21 *<br>* Seite 4, Absatz 5 *<br>* Seite 5, Absatz 4 *<br>* Seite 7, Absatz 4 *<br>----- | 1-6, 12-14<br>7-10,15 | INV.<br>B01D53/10<br>B01D53/50<br>B01D53/68 |
| X,D<br>Y | EP 2 411 123 A1 (DRYSO TEC GMBH [DE])<br>1. Februar 2012 (2012-02-01)<br>* Absätze [0026] - [0032], [0036] - [0040], [0046] - [0050], [0054]; Abbildung 1 *<br>----- | 11<br>7-10,15 | |
| Y | WO 2011/039034 A1 (SCHLICHT TORSTEN [GB]; DOMBROWSKI DIRK [ES])<br>7. April 2011 (2011-04-07)<br>* Zusammenfassung; Anspruch 1 *<br>----- | 15 | |
| Y | WO 85/02453 A1 (WAAGNER BIRO AG [AT])<br>6. Juni 1985 (1985-06-06)<br>* Seite 2, Zeilen 1-10 *<br>----- | 15 | **RECHERCHIERTE SACHGEBIETE (IPC)** |
| X | EP 0 292 083 A2 (FICHTEL ROLAND)<br>23. November 1988 (1988-11-23)<br>* Spalte 2, Zeilen 45-50 *<br>* Spalte 3, Zeilen 1-10; Ansprüche 1-3 *<br>----- | 1 | B01D |
| X | DE 37 21 317 A1 (HOELTER HEINZ [DE])<br>5. Januar 1989 (1989-01-05)<br>* Zusammenfassung; Ansprüche 1, 2, 4 *<br>----- | 1 | |

Der vorliegende Recherchenbericht wurde für alle Patentansprüche erstellt

| Recherchenort | Abschlußdatum der Recherche | Prüfer |
|---|---|---|
| Den Haag | 22. Februar 2016 | Artos Fernández, V |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

.................................................................................

& : Mitglied der gleichen Patentfamilie, übereinstimmendes
  Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 18 5262

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-02-2016

| Im Recherchenbericht angeführtes Patentdokument | Datum der Veröffentlichung | Mitglied(er) der Patentfamilie | Datum der Veröffentlichung |
|---|---|---|---|
| WO 8911329 A1 | 30-11-1989 | DE 3915934 A1 | 30-11-1989 |
| | | EP 0377010 A1 | 11-07-1990 |
| | | WO 8911329 A1 | 30-11-1989 |
| EP 2411123 A1 | 01-02-2012 | DE 102009030902 A1 | 16-12-2010 |
| | | DK 2411123 T3 | 08-07-2013 |
| | | EP 2411123 A1 | 01-02-2012 |
| | | ES 2418536 T3 | 14-08-2013 |
| | | WO 2010142369 A1 | 16-12-2010 |
| WO 2011039034 A1 | 07-04-2011 | CA 2774942 A1 | 07-04-2011 |
| | | DE 102009045278 A1 | 05-05-2011 |
| | | EP 2482971 A1 | 08-08-2012 |
| | | US 2012235086 A1 | 20-09-2012 |
| | | WO 2011039034 A1 | 07-04-2011 |
| WO 8502453 A1 | 06-06-1985 | AT 380645 B | 25-06-1986 |
| | | DD 223073 A5 | 05-06-1985 |
| | | DE 3473030 D1 | 01-09-1988 |
| | | DK 340285 A | 25-07-1985 |
| | | EP 0162085 A1 | 27-11-1985 |
| | | HU 194981 B | 28-03-1988 |
| | | WO 8502453 A1 | 06-06-1985 |
| EP 0292083 A2 | 23-11-1988 | AT 110582 T | 15-09-1994 |
| | | AT 137417 T | 15-05-1996 |
| | | DE 8816866 U1 | 28-02-1991 |
| | | DE 8817061 U1 | 14-01-1993 |
| | | EP 0292083 A2 | 23-11-1988 |
| | | EP 0314733 A1 | 10-05-1989 |
| | | EP 0496432 A1 | 29-07-1992 |
| | | EP 0655273 A2 | 31-05-1995 |
| | | HK 89095 A | 16-06-1995 |
| | | JP 2602085 B2 | 23-04-1997 |
| | | JP H01503232 A | 02-11-1989 |
| | | WO 8809203 A2 | 01-12-1988 |
| DE 3721317 A1 | 05-01-1989 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2411123 A1